(19) **Europäisches Patentamt / European Patent Office / Office européen des brevets**

(11) **EP 4 589 901 A1**

(12) **EUROPEAN PATENT APPLICATION**
published in accordance with Art. 153(4) EPC

(43) Date of publication:
**23.07.2025 Bulletin 2025/30**

(21) Application number: **23884308.0**

(22) Date of filing: **19.07.2023**

(51) International Patent Classification (IPC):
**H04L 27/26** (2006.01)

(52) Cooperative Patent Classification (CPC):
**H04L 27/26; Y02D 30/70**

(86) International application number:
**PCT/CN2023/108240**

(87) International publication number:
**WO 2024/093369 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 CN 202211379978**

(71) Applicant: **Huawei Technologies Co., Ltd.**
**Shenzhen, Guangdong 518129 (CN)**

(72) Inventors:
• **ZHOU, Han**
**Shenzhen, Guangdong 518129 (CN)**
• **ZHANG, Ji**
**Shenzhen, Guangdong 518129 (CN)**
• **TIE, Xiaolei**
**Shenzhen, Guangdong 518129 (CN)**
• **HUA, Meng**
**Shenzhen, Guangdong 518129 (CN)**
• **HUANG, Wenwen**
**Shenzhen, Guangdong 518129 (CN)**

(74) Representative: **Grünecker Patent- und Rechtsanwälte**
**PartG mbB**
**Leopoldstraße 4**
**80802 München (DE)**

(54) **COMMUNICATION METHOD AND COMMUNICATION APPARATUS**

(57) Embodiments of this application provide a communication method and a communication apparatus. In the method, a low power wake-up signal sent by a network device includes a plurality of OFDM symbols, each OFDM symbol carries a plurality of OOK symbols, and each OOK symbol corresponds to one time domain sequence. Because the time domain sequence corresponding to each OOK symbol can be used to implement frequency domain amplitude randomization, after the time domain sequence is transformed to frequency domain, a spectrum is dispersed, and a case in which the spectrum is excessively centralized does not occur. This can avoid an impact caused by frequency selective fading, to help improve receiving performance of a receiving end for the low power wake-up signal.

A base station generates a low power wake-up signal — 1501

↓

The base station sends the low power wake-up signal through broadcast — 1502

**FIG. 15**

EP 4 589 901 A1

**Description**

CROSS-REFERENCE TO RELATED APPLICATION

This application claims priority to Chinese Patent Application No. 202211379978.4, filed with the China National Intellectual Property Administration on November 4, 2022 and entitled "COMMUNICATION METHOD AND COMMUNICATION APPARATUS", which is incorporated herein by reference in its entirety.

TECHNICAL FIELD

This application relates to the field of communication technologies, and in particular, to a communication method and a communication apparatus.

BACKGROUND

A network device may send a low power wake-up signal through broadcast, to wake up a terminal device in an idle state or an inactive state.

If a frequency domain spectrum of the low power wake-up signal is excessively centralized, signal spectrum power is completely centralized on a center frequency. Therefore, in a signal sending process, once a frequency on which the signal spectrum power is centralized encounters frequency selective fading, receiving performance for the low power wake-up signal is greatly reduced.

SUMMARY

Embodiments of this application provide a communication method and a communication apparatus, to improve receiving performance for a low power wake-up signal.

According to a first aspect, an embodiment of this application provides a communication method. The method may be performed by a network device or a chip used in the network device. An example in which the network device performs the method is used. The network device generates a low power wake-up signal, where the network device sends the low power wake-up signal through broadcast, where the low power wake-up signal includes a plurality of orthogonal frequency division multiplexing (orthogonal frequency division multiplexing, OFDM) waveform symbols in time domain, each of the plurality of OFDM symbols carries a plurality of on-off keying (on-off keying, OOK) symbols, each of the plurality of OOK symbols corresponds to one time domain sequence, and the time domain sequence is used to implement frequency domain amplitude randomization.

In the foregoing solution, the low power wake-up signal sent by the network device includes the plurality of OFDM symbols, each OFDM symbol carries one or more OOK symbols, and each OOK symbol corresponds to one time domain sequence. Because the time domain sequence corresponding to each OOK symbol can be used to implement frequency domain amplitude randomization, after the time domain sequence is transformed to frequency domain, a spectrum is dispersed, and a case in which the spectrum is excessively centralized does not occur. This can avoid an impact caused by frequency selective fading, to help improve receiving performance of a receiving end for the low power wake-up signal.

In a possible implementation, the network device determines a type of the time domain sequence based on a length of the time domain sequence.

In the foregoing solution, different types of time domain sequences can be flexibly selected.

In a possible implementation, when the length of the time domain sequence is greater than a first threshold, the type of the time domain sequence is a ZC sequence; and when the length of the time domain sequence is less than or equal to the first threshold, the type of the time domain sequence is a machine selection sequence.

In a possible implementation, a length of the time domain sequence is 12 or 24, and the time domain sequence is a long term evolution (long term evolution, LTE) machine selection sequence.

In a possible implementation, a length of the time domain sequence is 6, 12, 18, 24, or 30, and a type of the time domain sequence is a new radio (new radio, NR) machine selection sequence.

In a possible implementation, a type of the time domain sequence is a ZC sequence.

In a possible implementation, that the network device generates the low power wake-up signal includes: The network device obtains a pre-stored frequency domain sequence corresponding to the time domain sequence; and the network device generates the low power wake-up signal based on the frequency domain sequence.

In the foregoing solution, a correspondence between the time domain sequence and the frequency domain sequence is pre-stored, to help increase a speed of generating the low power wake-up signal, so as to improve communication efficiency.

In a possible implementation, the low power wake-up signal includes a synchronization signal, and the synchronization signal is indicated by at least one of OOK symbols corresponding to the plurality of OFDM symbols; and the network device sends, through broadcast, a synchronization parameter related to the synchronization signal, where the synchronization parameter includes sequence parameters of time domain sequences corresponding to OOK symbols carried on the plurality of OFDM symbols, or a time-varying rule of sequence parameters of time domain sequences corresponding to OOK symbols carried on the plurality of OFDM symbols.

In the foregoing solution, the sequence parameters of the time domain sequences or the time-varying rule of the sequence parameters of the time domain sequences is sent to the terminal device. In this way, the terminal device can determine the sequence parameters of the time domain sequences, and can accurately determine the time domain sequences based on the sequence parameters of the time domain sequences, so that auxiliary synchronization can be performed on the terminal device based on the time domain sequences. This helps implement precise time synchronization of the terminal device and improve receiving performance of a main receiver of the terminal device.

In a possible implementation, when the time domain sequence is the ZC sequence, the synchronization parameter further includes cyclic shift values of ZC sequences corresponding to the plurality of OFDM symbols, or a time-varying rule of cyclic shift values of ZC sequences corresponding to the plurality of OFDM symbols.

In a possible implementation, a sequence parameter of the time domain sequence corresponding to at least one of OOK symbols carried on the plurality of OFDM symbols forms indication information, and the indication information indicates at least one of the following information: identification information of a cell, whether system information of the cell changes, and earthquake and tsunami warning information, where the cell is a cell in which the low power wake-up signal is sent through broadcast.

In the foregoing solution, the indication information may be formed through the sequence parameter of the time domain sequence, to indicate additional information to the terminal device, so that communication efficiency can be improved.

According to a second aspect, an embodiment of this application provides a communication method. The method may be performed by a terminal device or a chip used in the terminal device. An example in which the terminal device performs the method is used. The terminal device receives a synchronization parameter related to a synchronization signal, where the terminal device receives a low power wake-up signal, and the low power wake-up signal includes the synchronization signal, the low power wake-up signal includes a plurality of OFDM symbols in time domain, each of the plurality of OFDM symbols carries a plurality of OOK symbols, each of the plurality of OOK symbols corresponds to one time domain sequence, the time domain sequence is used to implement frequency domain amplitude randomization, and the synchronization signal is indicated by at least one of OOK symbols corresponding to the plurality of OFDM symbols; the terminal device determines, based on the synchronization parameter, time domain sequences corresponding to OOK symbols carried on the plurality of OFDM symbols; and the terminal device performs auxiliary synchronization on the terminal device based on the time domain sequences corresponding to the OOK symbols carried on the plurality of OFDM symbols.

In the foregoing solution, the network device sends the synchronization parameter to the terminal device, and the terminal device may determine the time domain sequences based on the synchronization parameter, so that auxiliary synchronization can be performed on the terminal device based on the time domain sequences. This helps implement precise time synchronization of the terminal device and improve receiving performance of a main receiver of the terminal device.

In a possible implementation, the synchronization parameter includes sequence parameters of the time domain sequences corresponding to the OOK symbols carried on the plurality of OFDM symbols, or a time-varying rule of sequence parameters of the time domain sequences corresponding to the OOK symbols carried on the plurality of OFDM symbols.

In the foregoing solution, the network device sends the sequence parameters of the time domain sequences or the time-varying rule of the sequence parameters of the time domain sequences to the terminal device. In this way, the terminal device can determine the sequence parameters of the time domain sequences, and can accurately determine the time domain sequences based on the sequence parameters of the time domain sequences, so that auxiliary synchronization can be performed on the terminal device based on the time domain sequences. This helps implement precise time synchronization of the terminal device and improve receiving performance of a main receiver of the terminal device.

In a possible implementation, when the time domain sequence is the ZC sequence, the synchronization parameter further includes cyclic shift values of ZC sequences corresponding to the plurality of OFDM symbols, or a time-varying rule of cyclic shift values of ZC sequences corresponding to the plurality of OFDM symbols.

In a possible implementation, that the terminal device performs auxiliary synchronization on the terminal device based on the time domain sequences corresponding to the OOK symbols carried on the plurality of OFDM symbols includes: The terminal device performs one or more of the following operations on the terminal device based on the time domain sequences corresponding to the OOK symbols carried on the plurality of OFDM symbols: time-frequency offset estimation, automatic gain control, signal-to-noise ratio estimation, or mobility measurement.

In a possible implementation, the time domain sequence is a ZC sequence or a machine selection sequence.

According to a third aspect, an embodiment of this application provides a communication method. The method may be performed by a terminal device or a chip used in the terminal device. An example in which the terminal device performs the method is used. The terminal device receives a low power wake-up signal, where the terminal device wakes up the terminal device based on the low power wake-up signal, where the low power wake-up signal includes a plurality of OFDM symbols in time domain, each of the plurality of OFDM symbols carries a plurality of OOK symbols, each of the plurality of OOK symbols corresponds to one time domain sequence, and the time domain sequence is used to implement frequency domain amplitude randomization.

In the foregoing solution, the low power wake-up signal sent by the network device includes the plurality of OFDM symbols, each OFDM symbol carries one or more OOK symbols, and each OOK symbol corresponds to one time domain sequence. Because the time domain sequence corresponding to each OOK symbol can be used to implement frequency domain amplitude randomization, after the time domain sequence is transformed to frequency domain, a spectrum is dispersed, and a case in which the spectrum is excessively centralized does not occur, to help improve receiving performance of a receiving end for the low power wake-up signal.

In a possible implementation, the terminal device performs detection on OOK symbols carried on the low power wake-up signal, and determines time domain sequences corresponding to the OOK symbols carried on the low power wake-up signal; and the terminal device determines indication information based on sequence parameters corresponding to the detected time domain sequences.

In the foregoing solution, the indication information may be formed through the sequence parameters of the time domain sequences, to indicate additional information to the terminal device, so that communication efficiency can be improved.

In a possible implementation, the indication information indicates at least one of the following information: identification information of a cell, whether system information of the cell changes, and earthquake and tsunami warning information, where the cell is a cell in which the low power wake-up signal is sent through broadcast.

In a possible implementation, the time domain sequence is a ZC sequence or a machine selection sequence.

According to a fourth aspect, an embodiment of this application provides a communication apparatus. The apparatus may be a network device, or may be a chip used in the network device. The apparatus has a function of implementing any implementation in the first aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a terminal device, or may be a chip used in the terminal device. The apparatus has a function of implementing any implementation in the second aspect and the third aspect. The function may be implemented by hardware, or may be implemented by hardware executing corresponding software. The hardware or the software includes one or more modules corresponding to the function.

According to a sixth aspect, an embodiment of this application provides a communication apparatus, including a processor coupled to a memory. The processor is configured to invoke a program stored in the memory, to perform any implementation in the first aspect to the third aspect. The memory may be located inside or outside the apparatus. In addition, there may be one or more processors.

According to a seventh aspect, an embodiment of this application provides a communication apparatus, including a processor and a memory. The memory is configured to store computer instructions, and when the apparatus is run, the processor executes the computer instructions stored in the memory, to enable the apparatus to perform any implementation in the first aspect to the third aspect.

According to an eighth aspect, an embodiment of this application provides a communication apparatus, including units or means (means) configured to perform steps of any implementation in the first aspect to the third aspect.

According to a ninth aspect, an embodiment of this application provides a communication apparatus, including a processor and an interface circuit. The processor is configured to communicate with another apparatus through the interface circuit, and perform any implementation in the first aspect to the third aspect. There are one or more processors.

According to a tenth aspect, an embodiment of this application further provides a computer-readable storage medium. The computer-readable storage medium stores instructions, and when the instructions are run on a communication apparatus, any implementation method in the first aspect to the third aspect is performed.

According to an eleventh aspect, an embodiment of this application further provides a computer program product. The computer program product includes a computer program or instructions, and when the computer program or the instructions are run on a communication apparatus, any implementation method in the first aspect to the third aspect is performed.

According to a twelfth aspect, an embodiment of this application further provides a chip system, including a processor configured to perform any implementation method in the first aspect to the third aspect.

BRIEF DESCRIPTION OF DRAWINGS

FIG. 1 is a diagram of an architecture of a communication system to which an embodiment of this application is applied;

FIG. 2 is an example diagram of discrete on-off keying;

FIG. 3 is an example diagram of envelope detection;

FIG. 4 is a diagram of sequences corresponding to different sequence parameters of an LTE machine selection sequence;

FIG. 5 is a diagram of sequences corresponding to different sequence parameters of an LTE machine selection sequence;

FIG. 6 is a diagram of sequences corresponding to different sequence parameters of an NR machine selection sequence;

FIG. 7 is a diagram of sequences corresponding to different sequence parameters of an NR machine selection sequence;

FIG. 8 is a diagram of sequences corresponding to different sequence parameters of an NR machine selection sequence;

FIG. 9 is a diagram of sequences corresponding to different sequence parameters of an NR machine selection sequence;

FIG. 10 is a diagram of sequences corresponding to different sequence parameters of an NR machine selection sequence;

FIG. 11 is a diagram of sequences corresponding to different sequence parameters of an NR machine selection sequence;

FIG. 12 is a diagram of sequences corresponding to different sequence parameters of an NR machine selection sequence;

FIG. 13 is a diagram of sequences corresponding to different sequence parameters of an NR machine selection sequence;

FIG. 14 is an example diagram of transmitting two OOK symbols in one OFDM symbol;

FIG. 15 is a schematic flowchart of a communication method according to an embodiment of this application;

FIG. 16 is an example diagram of a frequency-amplitude response obtained by transforming a time domain sequence to frequency domain;

FIG. 17 is a schematic flowchart of a communication method according to an embodiment of this application;

FIG. 18 is a schematic flowchart of a communication method according to an embodiment of this application;

FIG. 19 is a diagram of a communication apparatus according to an embodiment of this application; and

FIG. 20 is a diagram of a communication apparatus according to an embodiment of this application.

DESCRIPTION OF EMBODIMENTS

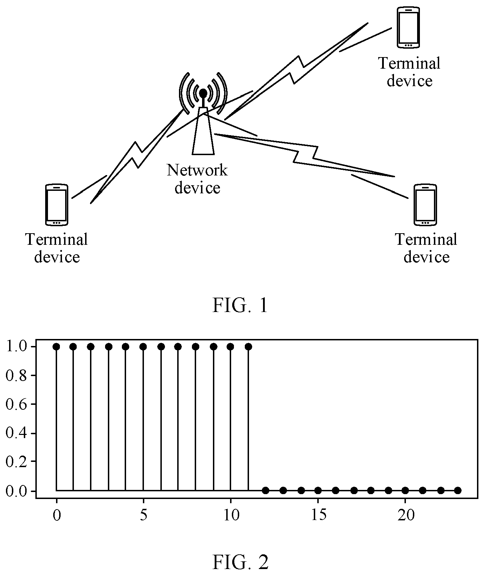

FIG. 1 is a diagram of an architecture of a communication system to which an embodiment of this application is applied. The communication system includes a network device and at least one terminal device.

The terminal device in embodiments of this application is a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including an indoor or outdoor scenario and a handheld or vehicle-mounted scenario, may be deployed on a water surface (for example, on a ship), or may be deployed in the air (for example, on an airplane, a balloon, or a satellite). The terminal device may be a cellular phone, a mobile phone (mobile phone), a tablet computer (pad), a wireless data card, a wireless modem, a satellite terminal, a vehicle-mounted device, a wearable device, an uncrewed aerial vehicle, a robot, a smart point of sale (point of sale, POS) terminal, customer-premises equipment (customer-premises equipment, CPE), a computer having a wireless transceiver function, a virtual reality (virtual reality, VR) terminal device, an augmented reality (augmented reality, AR) terminal device, a terminal device in industrial control (industrial control), a terminal device in self-driving (self-driving), a terminal device in remote medical (remote medical), a terminal device in a smart grid (smart grid), a terminal in transportation safety (transportation safety), a terminal device in a smart city (smart city), or a terminal in a smart home (smart home).

The network device in embodiments of this application is a device having a wireless transceiver function, and is configured to communicate with the terminal device, or may be a device that can connect the terminal device to a wireless network, for example, a radio access network (radio access network, RAN) device or a node. The network device in embodiments of this application may include base stations in various forms, for example, a macro base station, a micro base station (also referred to as a small cell), a relay station, an access point, a device that implements a base station function in an evolved communication system after a 5th generation (5th generation, 5G) communication system, an access point (access point, AP) in a wireless fidelity (wireless fidelity, Wi-Fi) system, an integrated access and backhaul (integrated access and backhaul, IAB) node, a transmission point (transmission reception point, TRP), a transmission point (transmission point, TP), a mobile switching center, and a device that undertakes a base station function in device-to-device (device-to-device, D2D) communication, vehicle-to-everything (vehicle-to-everything, V2X) communication, machine-to-machine (machine-to-machine, M2M) communication, and the like. The network device may further include a central unit (central unit, CU) and a distributed unit (distributed unit, DU) in a cloud access network (cloud radio access network, C-RAN) system, and a network device in a non-terrestrial network (non-terrestrial network, NTN) communication system, to be specific, may be deployed on a high-altitude platform or a satellite; and may further include various devices that form an access node such as an active antenna unit (active antenna unit, AAU) and a baseband unit (baseband unit, BBU). This is not specifically limited in embodiments of this application.

For ease of description, in embodiments of this application, an example in which a UE is used as a terminal device and a base station is used as a network device is used for description. This is uniformly described herein, and details are not described below.

For ease of understanding the solutions of this application, the following describes background knowledge in embodiments of this application. The background knowledge is also used as a part of the present invention.

1. Power saving technology

Compared with a long term evolution (long term evolution, LTE) system, 5G new radio (new radio, NR) supports a larger transmission bandwidth, more transceiver antenna arrays, a higher transmission rate, and a scheduling mechanism that is more flexible and that has a smaller granularity. Although the foregoing features of the 5G NR provide more application scopes, power consumption load of the UE is greatly increased.

To reduce power consumption of the UE, a power saving (power saving) research project is introduced in an NR Rel-16/17 version in the 3rd generation partnership project (3rd generation partnership project, 3GPP), to study possible power saving solutions for the UE in various states (including a connected state, an idle state, and an inactive state).

The idle state is a state in which the UE completes camping in a cell but does not perform a random access process. The UE usually enters the idle state after being powered on or after performing radio resource control (radio resource control, RRC) release.

The idle state corresponds to the connected state, and the connected state is a state in which the UE does not perform RRC release after completing the random access process. The UE in the connected state may perform data transmission with a network device. After completing the random access process, the UE in the idle state is transformed to the connected state. After completing the RRC release, the UE in the connected state is transformed to the idle state.

The inactive state is a state between the connected state and the idle state. For the UE in the inactive state, a user plane bearer of an air interface is suspended (suspended), and a user plane bearer and a control plane bearer between a RAN and a core network (core network, CN) are still maintained. When the UE initiates a call or a service request, the user plane bearer of the air interface needs to be activated, and the existing user plane bearer and control plane bearer between the RAN and the CN are reused.

The following power saving methods have been defined before the 3GPP NR system is introduced.

Method 1: Extended discontinuous reception (extended discontinuous reception, eDRX) mechanism

In the LTE system and the NR system, a maximum DRX cycle is 2.56s (s). Some UEs, such as internet of things terminals (such as a water meter, an electricity meter, and a gas meter), have high requirements for power saving. Therefore, the eDRX mechanism is introduced to extend a cycle in which the UE monitors paging to save power. A monitoring cycle of up to 2 hours can be introduced in the eDRX mechanism.

Method 2: Power saving mode (power saving mode, PSM)/Mobile initiated connection only (mobile initiated connection only, MICO) mode

Some UEs, such as sensors, may perform only uplink-triggered services. The UEs periodically report data collected by the UEs and do not perform downlink-triggered services, or are insensitive to latency of downlink-triggered services. Therefore, the PSM/MICO is introduced. In the PSM/MICO, the UE usually does not need to monitor downlink paging. Instead, the UE monitors paging only within a short period of time after an uplink service is completed, to further reduce power consumption of the UE.

2. Paging (paging) mechanism

A paging message is used by a network to trigger the UE to establish an RRC connection, notify the UE to update system information, send an earthquake and tsunami warning, or the like. The paging message is sent to the UE through a physical downlink shared channel (physical downlink shared channel, PDSCH), and the PDSCH is scheduled through a physical downlink control channel (physical downlink control channel, PDCCH) scrambled by using a paging radio network temporary identifier (paging radio network temporary identifier, P-RNTI).

A process in which the UE obtains the paging message is as follows: The UE in the idle state or the inactive state is periodically woken up. After being woken up, the UE monitors the PDCCH scrambled by using the P-RNTI, and parses downlink control information (downlink control information, DCI) in the PDCCH to determine location information (for example, a time-frequency location) of the PDSCH. The UE receives the PDSCH based on the location information of the PDSCH, and the UE obtains a paging message on the PDSCH. The UE determines whether the paging message includes an identifier of the UE. If the paging message includes the identifier of the UE, the UE performs a corresponding operation, for example, establishes the RRC connection, or returns from the inactive state to the idle state.

A specific time point at which the UE receives the paging message may be defined based on a paging frame (paging frame, PF) and a paging occasion (paging occasion, PO). The PF indicates a radio frame (radio frame) in which the paging message is sent. In other words, the UE in the idle state or the inactive state attempts to receive paging only in the PF. In the NR system, a length of one radio frame is 10 ms (ms).

The UE may determine whether a radio frame is the PF according to the following Formula 1:

$$(SFN+PF\_offset) \bmod T=(T \text{ div } N)*(UE\_ID \bmod N) \text{ (Formula 1)}$$

SFN is a system frame number (system frame number) of a current radio frame.

PF_offset is a frame offset of the PF.

T is a DRX cycle, and is a time unit. In the NR system, the DRX cycle may be 1280 ms, 2560 ms, or the like.

N is a quantity of PFs included in each DRX cycle.

UE_ID is the identifier of the UE, and UE_ID may be 5G-S-TMSI mod 1024 or a full I-RNTI. 5G-S-TMSI is an abbreviation of a fifth generation system architecture evolution temporary mobile station identifier (fifth generation system architecture evolution temporary mobile station identifier).

When the SFN of the radio frame satisfies Formula 1, the radio frame is considered as a PF.

The PO indicates an occasion for attempting to receive paging in one PF. Each PF may correspond to a plurality of POs. In the NR, a parameter Ns indicates a quantity of POs corresponding to one PF, where Ns is equal to 1, 2, or 4. Each PO has an index number i_s, and i_s is determined according to the following Formula 2:

$$i\_s=floor(UE\_ID/N) \bmod Ns \text{ (Formula 2)}$$

It should be noted that, a base station does not send the paging message to the UE on each PO, and the UE performs detection on paging DCI on the PO to determine whether the base station sends the paging message.

3. Wake-up radio (wake-up radio, WUR)

The wake-up radio means that when a main receiver (a main receiver or a main radio) is in an ultra-deep sleep (ultra-deep sleep) mode or is completely powered off, a wireless station enables only one low power receiver to monitor a low power wake-up signal (low power wake-up signal, LP-WUS).

The main receiver is also referred to as a main communication module, a main circuit, or the like. The main receiver is a conventional receiver of the UE in the NR, and is configured to receive downlink signaling, a downlink signal, downlink data, and the like in the NR. The main receiver includes an intermediate radio frequency module and a baseband processing module.

The low power receiver is also referred to as a wake-up receiver (wake-up receiver), a low power wake-up radio (low power WUR, LP-WUR) receiver, a wake-up circuit, a communication auxiliary module, a secondary circuit, or the like. The low power receiver includes a simple receiver formed by the intermediate radio frequency module, or the low power receiver includes a module with lower power consumption. In this way, operating power consumption of the low power receiver is far lower than that of the main receiver. For example, the power consumption of the low power receiver in an operating state is only less than one tenth of average power consumption of the main receiver in an idle state.

An operating mode of the main receiver and an operating mode of the low power receiver are as follows.

After completing data receiving and sending, the main receiver returns to the idle state. The main receiver may enter the ultra-deep sleep mode or even be completely powered off to reduce power consumption. In this case, the low power receiver is in a power-on state and receives the LP-WUS.

Once the low power receiver receives the LP-WUS sent to the low power receiver or a group to which the low power receiver belongs, the low power receiver triggers the main receiver to wake up or power on, and the main receiver continues to receive and send data or signaling.

In this application, the LP-WUS may be a general term, and the LP-WUS includes the following two aspects.

(1) Synchronization signal (WUS-sync): The synchronization signal is also referred to as a synchronization sequence, or the like. The synchronization signal may be sent periodically, and is mainly used to provide a time synchronization function for the low power receiver, so that the low power receiver determines a frame, a subframe, a slot, a symbol, and the like of a current time point, determines whether the UE is in a cell coverage area, and determines whether a local clock has an offset.

(2) Wake-up signal: The wake-up signal is used to wake up a specific UE or a group of UEs, and trigger the UE to perform some operations, including but not limited to updating a system message, receiving a paging message, initiating random access, receiving disaster warning information, and the like.

In another implementation, the LP-WUS may also include the wake-up signal, but does not include the synchronization signal. The synchronization signal may be sent by the base station through broadcast by using additional signaling. For ease of description, an example in which the LP-WUS includes the synchronization signal and the wake-up signal is used for description in this application. It should be noted that, a preamble (preamble) used for LP-WUR synchronization and sent by a network side before the wake-up signal is sent is also a synchronization signal.

4. On-off keying (on-off keying, OOK) and envelope detection (envelope detection, ED)

The on-off keying is a simplest form of amplitude-shift keying (amplitude-shift keying, ASK) modulation, which represents information by existence or absence of a signal. For example, when the signal exists within a signal sampling time period, (ON) represents a bit value 1, and when no signal exists within the signal sampling time period, (off) represents a bit value 0. The signal sent within the sampling time period is also referred to as an OOK symbol.

FIG. 2 is an example diagram of discrete on-off keying. A total of 24 sampling points are sent, and every 12 sampling points represent one coding bit. A signal is sent in the first 12 sampling points, representing on. Therefore, code is 1. No signal is sent in the last 12 sampling points, representing off. Therefore, code is 0.

Based on the foregoing feature of simple modulation of the OOK symbol, the receiver can obtain the signal only through power detection. For example, in the foregoing first 12 sampling points, once power of the received signal that is detected by the UE exceeds a specific threshold, it may be considered that the base station sends the code 1. In the foregoing last 12 sampling points, once power of the received signal that is detected by the UE does not exceed a specific threshold, it may be considered that the base station does not send the signal, which is represented as the code 0.

Based on the foregoing feature of the simple modulation of OOK, the OOK symbol can be demodulated and received by using a simple device. Therefore, the OOK is suitable for an LP-WUS modulation mode. For receiving of the OOK symbol, an envelope detection method is generally used, and a main manner of the envelope detection is to perform detection on an amplitude of a signal.

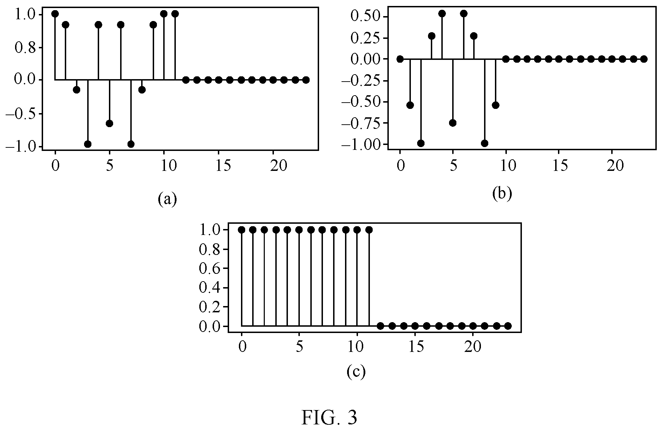

FIG. 3 is an example diagram of envelope detection. (a) in FIG. 3 represents a real (real) part of a signal, (b) in FIG. 3 represents an imaginary (imaginary) part of the signal, and (c) in FIG. 3 represents a signal amplitude (amplitude)

$$\text{amplitude} = \sqrt{\text{real}^2 + \text{imag}^2}$$

obtained based on the real part and the imaginary part.

5. Low peak to average power ratio (low peak to average power ratio, Low-PAPR) sequence

The LTE system and the 5G NR system provide a series of low-PAPR sequences. These sequences are generally frequency domain sequences. After being transformed to time domain through inverse fast Fourier transform (inverse fast fourier transformation, IFFT), these sequences have a feature of a constant amplitude in time domain. In this way, when a transmitter of the UE sends a signal generated based on these sequences, an amplifier of the transmitter can operate in a linear area, to provide good sending performance.

Commonly used low-PAPR sequences include a Zadoff-Chu sequence, an LTE machine selection sequence, an NR machine selection sequence, and the like, which are separately described below.

(1) Zadoff-Chu sequence

The Zadoff-Chu sequence is referred to as a ZC sequence for short, and is a complex number sequence. A root sequence of the ZC sequence is generated according to the following Formula 3:

$$x_\mu(m) = e^{-j\frac{\pi\mu m(m+1)}{N_{ZC}}} \quad 0 \le m \le N_{ZC} - 1 \quad \text{(Formula 3)},$$

where

a ZC sequence whose length is M needs to be generated, a value of $N_{ZC}$ needs to be first determined, and $N_{ZC}$ is a maximum prime number less than or equal to M.

$\mu$ is a sequence parameter, $\mu$ is any positive integer less than $N_{ZC}$ and co-prime to $N_{ZC}$, and different pieces of $\mu$ correspond to different sequences.

A length of the sequence generated according to Formula 3 is $N_{ZC}$, and remaining $M - N_{ZC}$ sequence values are $x_\mu(0), x_\mu(1), ..., x_\mu(M - N_{ZC} - 1)$, which is equivalent to cyclically supplementing the first $M - N_{ZC}$ sequence values of the root sequence to the end of the sequence.

The ZC sequence has the following features: An amplitude of each element in the sequence is a constant; and an autocorrelation between a sequence and a sequence generated by a cyclic shift of the sequence is 0.

(2) LTE machine selection sequence

A length of the LTE machine selection sequence is 12 or 24, an amplitude of each value of the sequence is 1, and a phase is $-\frac{3\pi}{4}, -\frac{\pi}{4}, \frac{\pi}{4}, \frac{3\pi}{4}$. The sequence is generated according to the following Formula 4:

$$r_\mu = e^{\frac{j\varphi(n)\pi}{4}}, 0 \le n \le M - 1 \quad \text{(Formula 4)},$$

where

a sequence parameter $\mu$ is a configured value, and different pieces of $\mu$ correspond to different sequences.

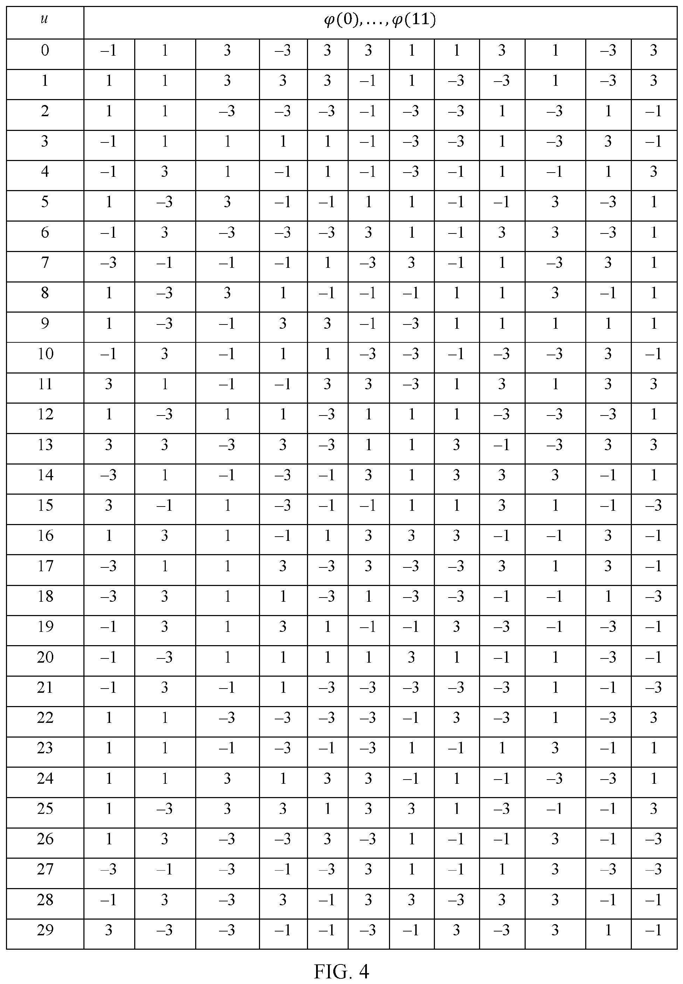

For a sequence whose length is 12, $\mu$ has 30 values, and sequences respectively corresponding to the 30 values of $\mu$ are shown in FIG. 4.

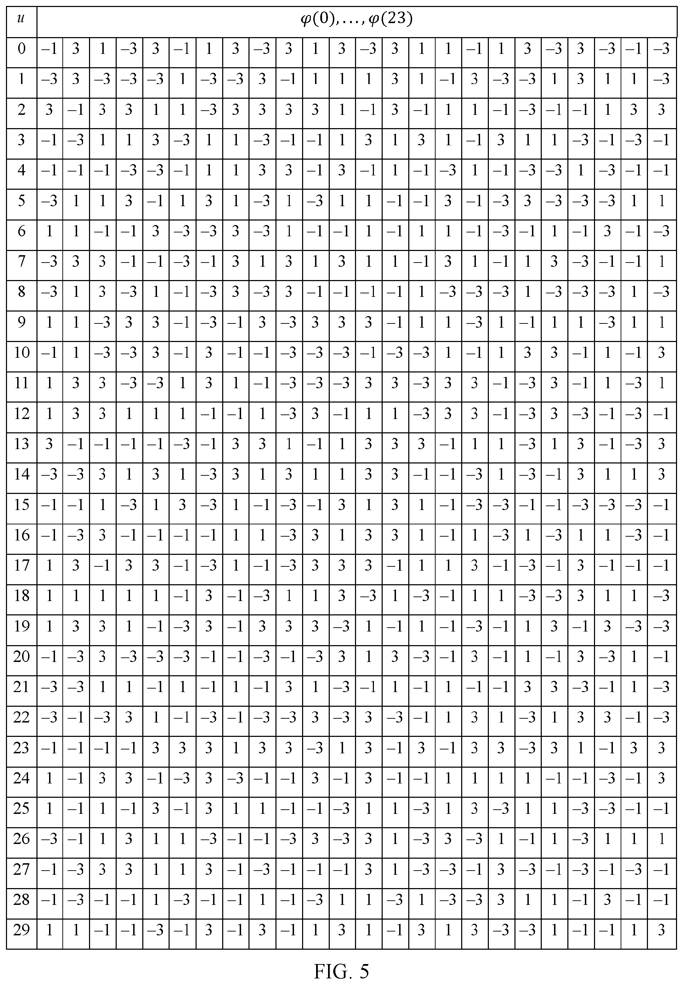

For a sequence whose length is 24, $\mu$ has 30 values, and sequences respectively corresponding to the 30 values of $\mu$ are shown in FIG. 5.

(3) NR machine selection sequence

The NR machine selection sequence includes two types: a type 1 and a type 2.

For the type 1, a sequence length is 6, 12, 18, 24, or 30, where a sequence whose length is 6, 12, 18, or 24 is generated according to the following Formula 5:

$$\overline{r}_{u,v}(n) = e^{j\varphi(n)\pi/4}, \quad 0 \le n \le M_{ZC} - 1 \quad \text{(Formula 5)},$$

where

a sequence parameter $\mu$ is a configured value, and different pieces of $\mu$ correspond to different sequences.

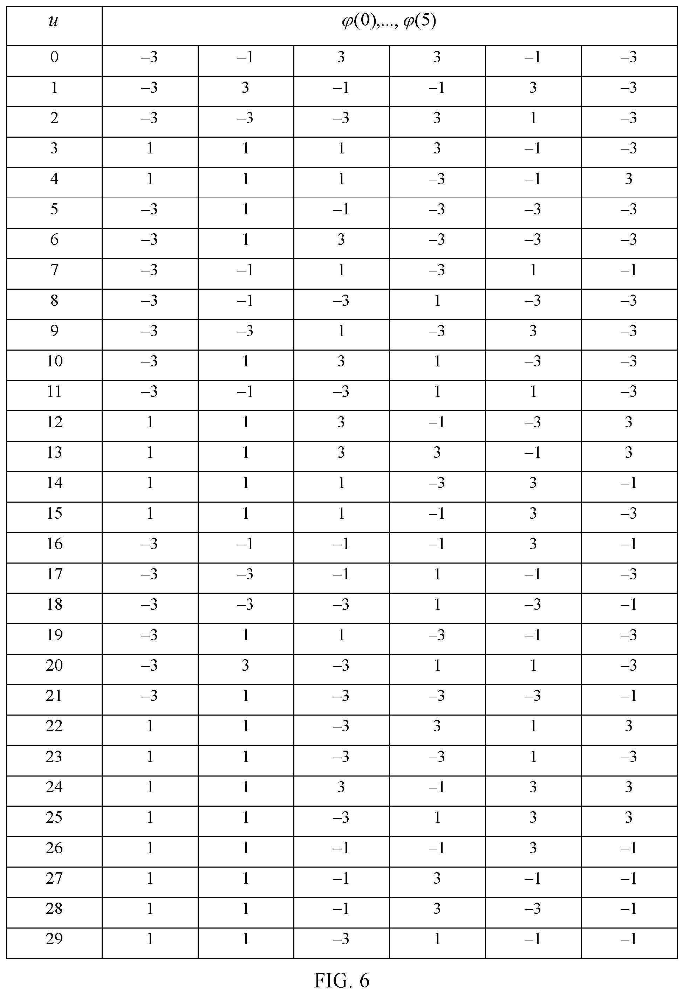

When $M_{ZC} = 6$, sequences respectively corresponding to different pieces of $\mu$ are shown in FIG. 6.

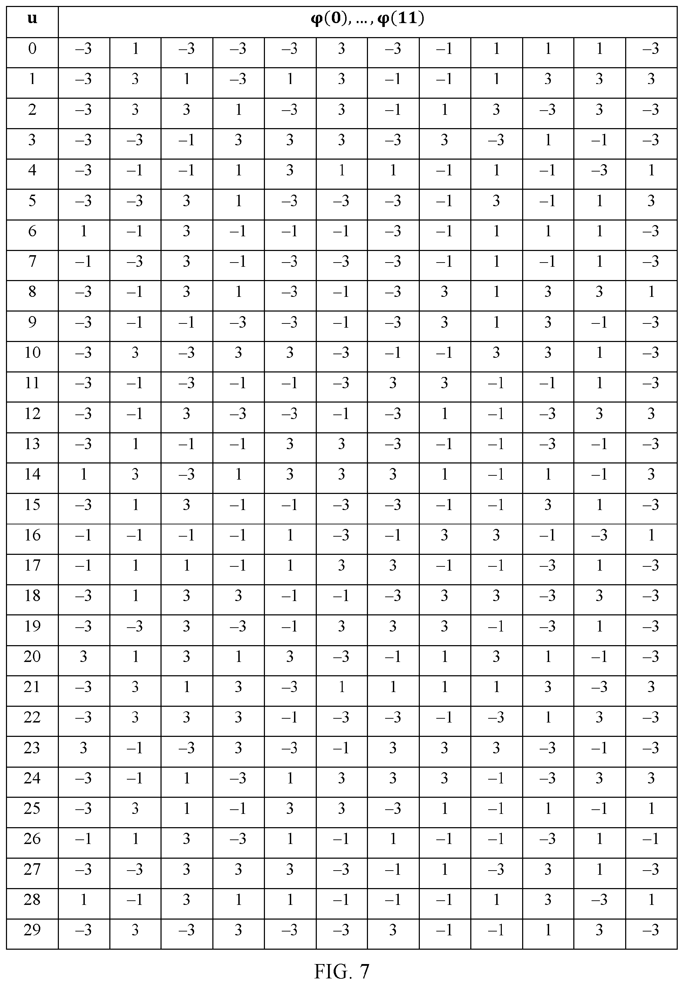

When $M_{ZC} = 12$, sequences respectively corresponding to different pieces of $\mu$ are shown in FIG. 7.

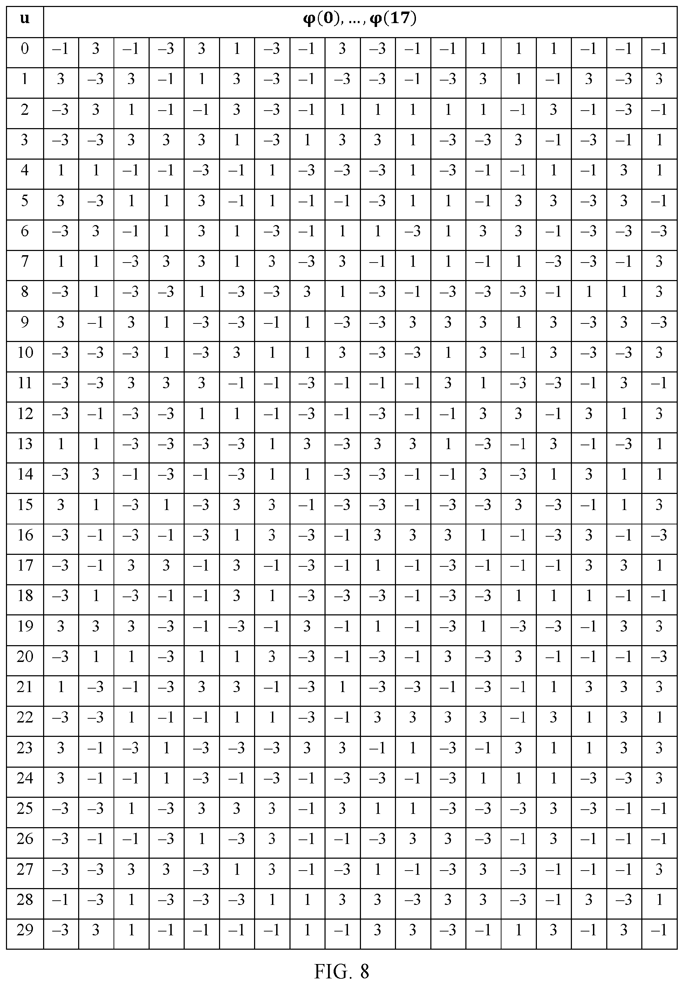

When $M_{ZC} = 18$, sequences respectively corresponding to different pieces of $\mu$ are shown in FIG. 8.

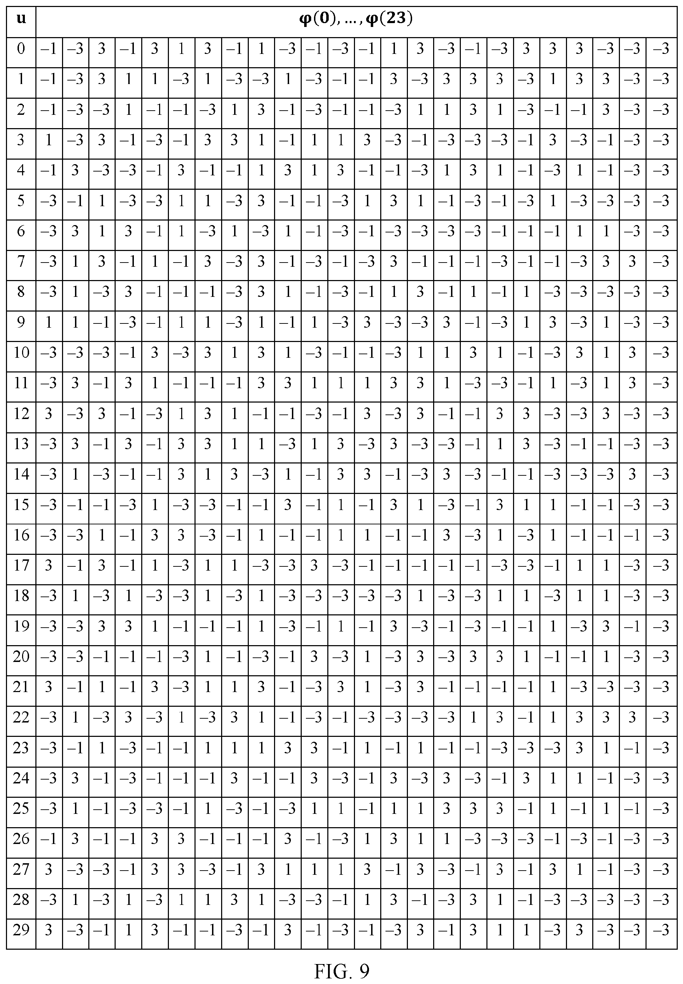

When $M_{ZC} = 24$, sequences respectively corresponding to different pieces of $\mu$ are shown in FIG. 9.

A sequence whose length is 30 is generated according to the following Formula 6:

$$\overline{r}_{u,v}(n) = e^{-j\frac{\pi(u+1)(n+1)(n+2)}{31}}, \quad 0 \le n \le M_{ZC} - 1 \quad \text{(Formula 6)},$$

where

for the type 2, a sequence length is 6, 12, 18, or 24. A sequence whose length is 6 is generated according to the following Formula 7:

$$\tilde{r}_{u,v}(i) = e^{j\varphi(i)\pi/8}, 0 \le i \le M - 1 \quad \text{(Formula 7)},$$

where

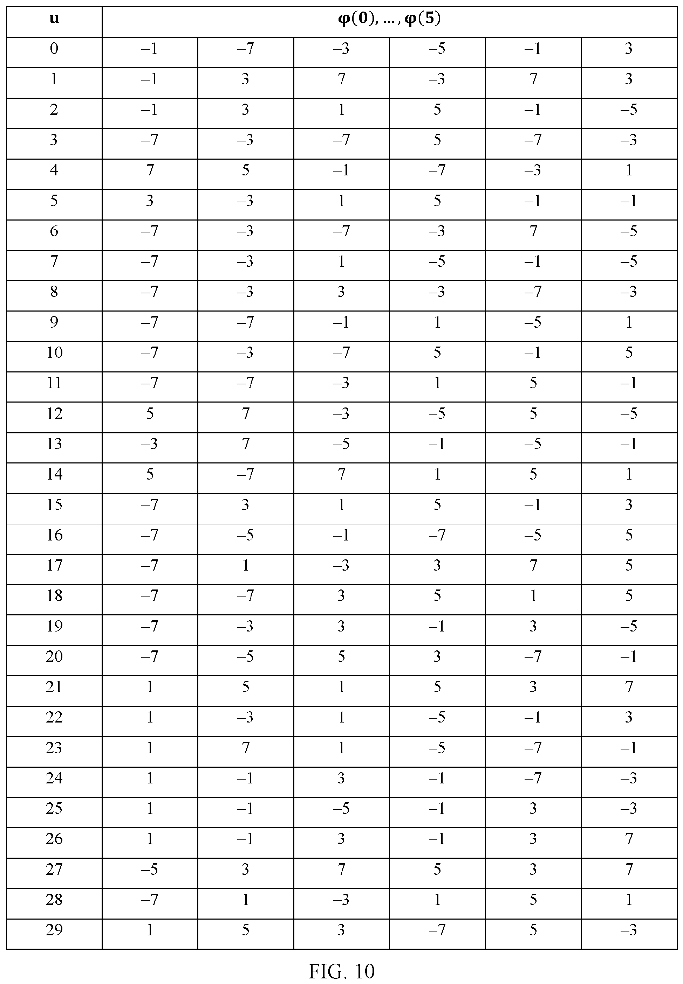

sequences respectively corresponding to different pieces of $\mu$ are shown in FIG. 10.

A sequence whose length is 12, 18, or 24 is generated according to the following Formula 8:

$$d(i) = \frac{e^{j\frac{\pi}{2}(i\bmod 2)}}{\sqrt{2}}\left[(1-2b(i)) + j(1-2b(i))\right] \quad \text{(Formula 8)},$$

where

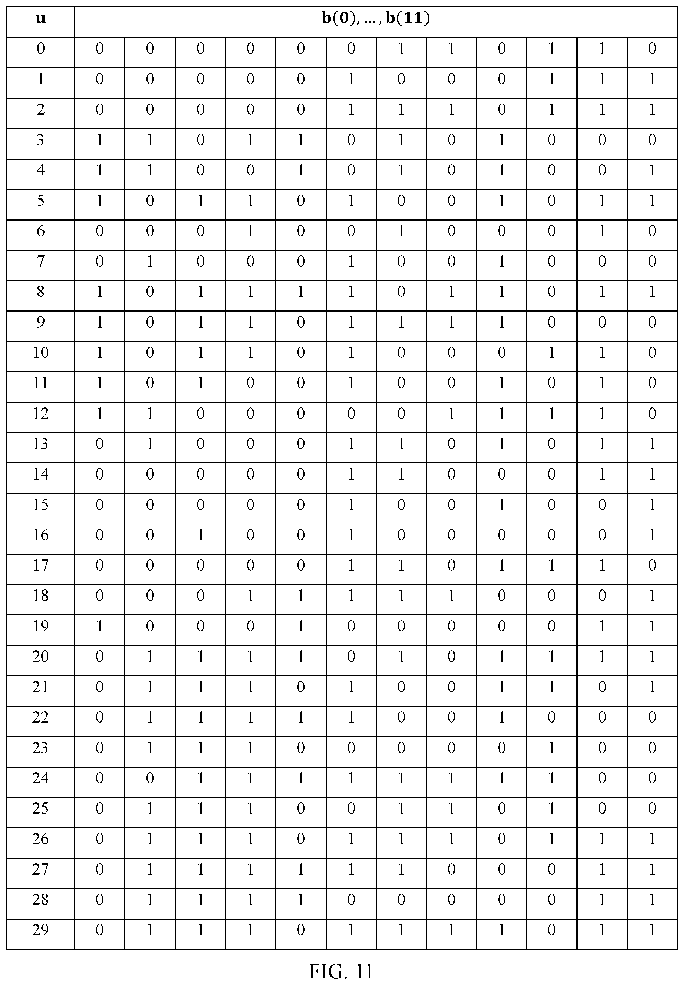

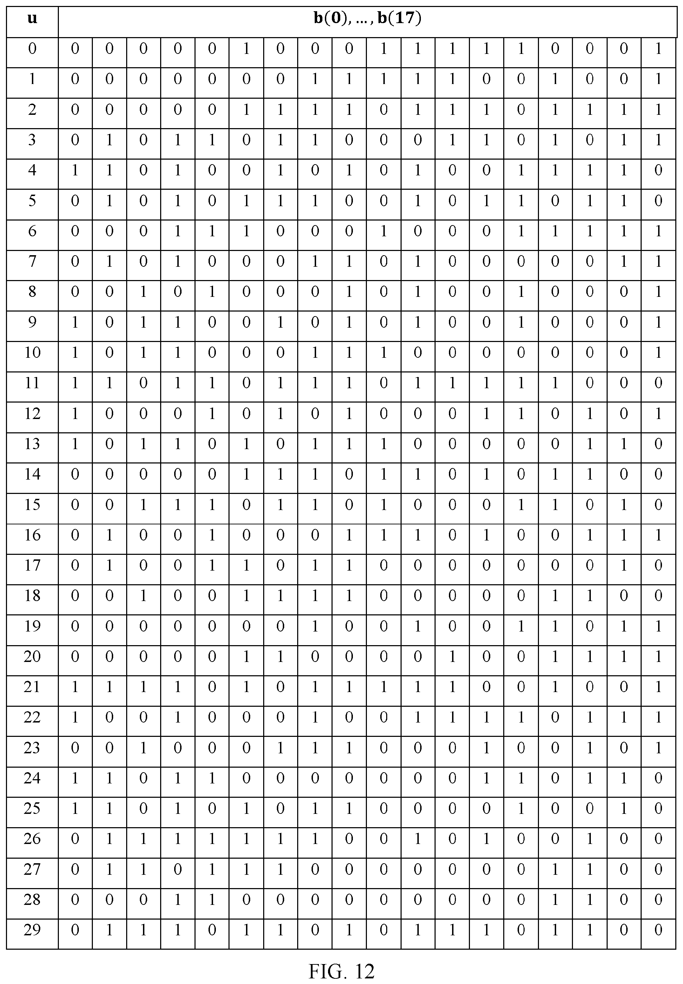

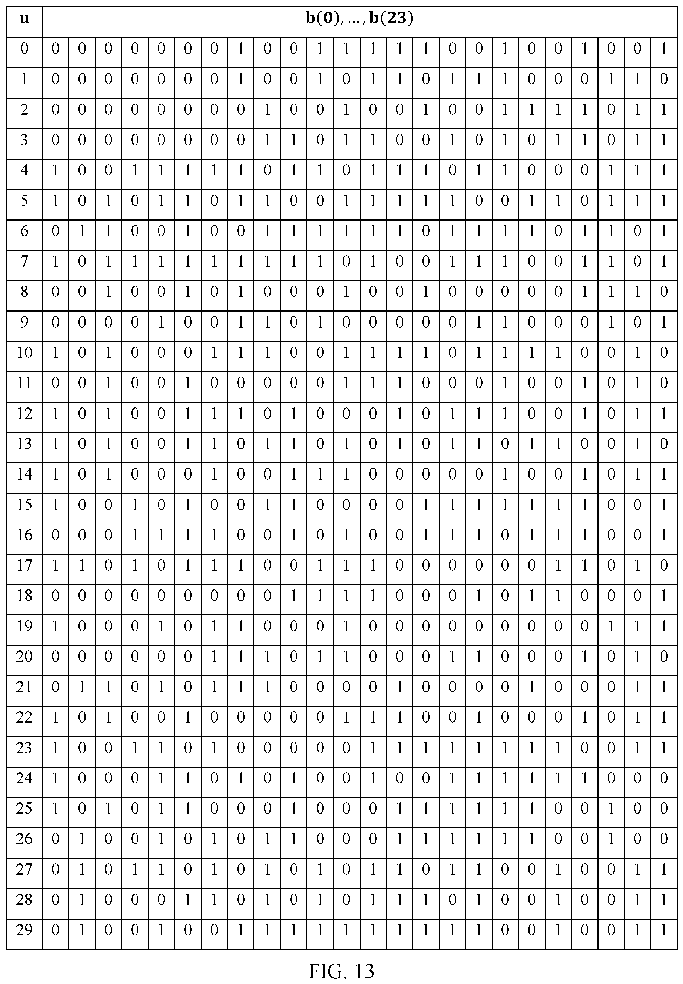

when the length is 12, sequences respectively corresponding to different pieces of $\mu$ are shown in FIG. 11;
when the length is 18, sequences respectively corresponding to different pieces of $\mu$ are shown in FIG. 12; and
when the length is 24, sequences respectively corresponding to different pieces of $\mu$ are shown in FIG. 13.

To deploy an LP-WUS in an existing NR system, an OOK symbol needs to be compatible with an orthogonal frequency division multiplexing (orthogonal frequency division multiplexing, OFDM) waveform in the NR system. A multi-carrier OOK sending form may be used.

When a base station needs to send one OOK on symbol on one OFDM symbol, a step of generating one OOK on symbol on one OFDM symbol includes:

Step a: Select M subcarriers in frequency domain, and fill the M subcarriers with non-zero information (which may be any non-zero value).
Step b: Perform IFFT on frequency domain signals on the M subcarriers, to obtain a time domain signal in one OFDM symbol.
Step c: Add a cyclic prefix (cyclic prefix, CP) to the time domain signal in one OFDM symbol.

When the base station needs to send one OOK off symbol on one OFDM symbol, the base station only needs to fill the M subcarriers with zero values.

According to the foregoing multi-carrier OOK solution, one OOK symbol (on or off) may be sent on one OFDM symbol in a frequency band of the M subcarriers, so that an OOK-based LP-WUS and the existing NR system coexist.

In the foregoing solution, one OFDM symbol carries one OOK symbol. To improve a signal capacity, in the present invention, it is considered that one OFDM symbol carries N OOK symbols, each OOK symbol is 1 bit, and N is an integer greater than 1. For example, the solution may be implemented by using discrete Fourier transform-spread orthogonal frequency division multiplexing (discrete fourier transform-spread OFDM, DFT-s-OFDM).

It is assumed that the N OOK symbols (namely, the N OOK symbols) $i_n$ are transmitted in one OFDM symbol, where $0 \le n < N$ and a value of $i_n$ is 0 or 1. If each OOK symbol occupies M carriers, the N OOK symbols occupy N*M subcarriers. A step of generating the N OOK symbols on one OFDM symbol includes:

Step 1: Select a time domain sequence $j_k$ whose length is N*M, where $0 \le k < M * N$ and $j_{nM}, \ldots, j_{(n+1)M-1}$ correspond to $i_n$. That is, when $i_n = 1$, M time domain values in $j_{nM}, \ldots, j_{(n+1)M-1}$ are non-zero values (for example, all 1s), and when $i_n = 0$, M time domain values in $j_{nM}, \ldots, j_{(n+1)M-1}$ are all 0s.
Step 2: The base station performs N*M-point fast Fourier transform (fast fourier transformation, FFT) (or discrete Fourier transform (discrete fourier transform, DFT)) on the time domain sequence $j_k$ to transform the time domain sequence $j_k$ to frequency domain, to obtain a frequency domain sequence $l_k$ whose length is N*M, where $0 \le k < M * N$, and each value of $l_k$ occupies one frequency domain subcarrier.
Step 3: Move the frequency domain sequence $l_k$ to a frequency domain area in which sending needs to be performed, and fill 0s or other data values in a frequency domain area outside the frequency domain area in which sending needs to be performed, to obtain frequency domain data.
Step 4: Transform the frequency domain data into time domain data through IFFT, and add a cyclic prefix and a shaping filter to the time domain data for sending.

In the foregoing solution, a plurality of OOK symbols can be transmitted in one OFDM symbol, to improve the signal capacity.

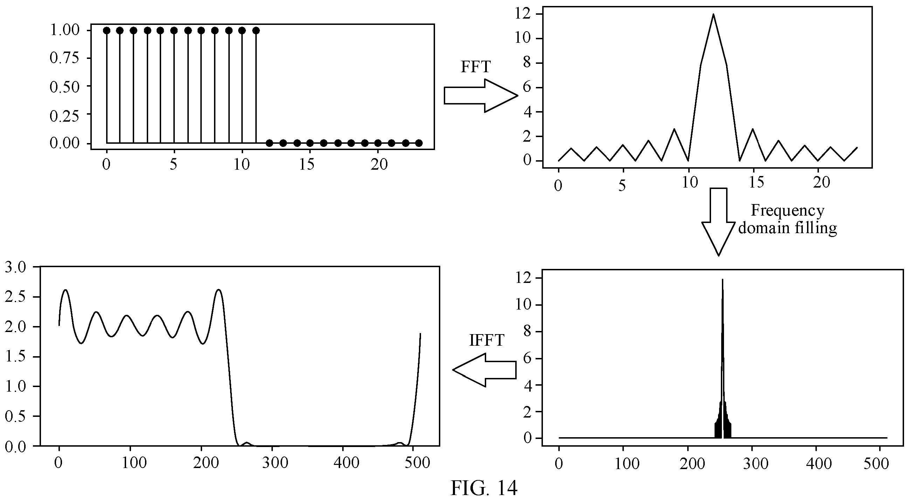

FIG. 14 is an example diagram of transmitting two OOK symbols in one OFDM symbol. Assuming that each OOK symbol of a bit occupies 12 subcarriers, that is, N=12, two OOK symbols need to occupy 24 subcarriers in total. Therefore, a sampling point sequence whose length is 24 is needed in time domain.

If two OOK symbols represent "10", values of the first 12 sampling points of the sampling point sequence whose length is 24 are 1s, and values of the last 12 sampling points are 0s, as shown in (a) in FIG. 14. If two OOK symbols represent "01", values of the first 12 sampling points of the sampling point sequence whose length is 24 are 0s, and values of the last 12 sampling points are 1s. Similarly, this may be extended to a case in which four OOK symbols, eight OOK symbols, or the like are transmitted in one OFDM symbol.

FFT needs to be performed on time domain sampling points, and a quantity of FFT points is the same as a quantity of time domain sampling points. A waveform of a frequency domain amplitude that is obtained by performing FFT is shown in (b) in FIG. 14, and 24 subcarriers are occupied. Then, frequency domain sampling points are moved to a frequency domain area in which sending needs to be performed, and 0s or other data values are filled in another frequency domain area, to obtain frequency domain data. As shown in (c) in FIG. 14, the OOK symbol is placed at a central location of frequency domain, and 0s are filled on two sides of the OOK symbol. Finally, IFFT is performed on the frequency domain data (namely, a frequency domain sequence) to obtain time domain data (namely, a time domain waveform). As shown in (d) in FIG. 14, for the finally formed time domain waveform, in one OFDM symbol, there is data in the first half of sampling points, and there is no data in the last half of sampling points, which exactly corresponds to a OOK symbol of 2 bits "10". Therefore, the OOK symbol of 2 bits is sent in one OFDM symbol.

In the foregoing multi-bit OOK implementation based on DFT-s-OFDM, if the time domain sequence in step 1 is improperly selected, a frequency domain spectrum of a signal may be excessively centralized. As shown in (c) in FIG. 14, signal spectrum power is completely centralized on a center frequency. During actual application, once a frequency on which the signal spectrum power is centralized encounters frequency selective fading, receiving performance for an LP-WUS is greatly reduced.

To resolve the foregoing problem, embodiments of this application provide a corresponding solution.

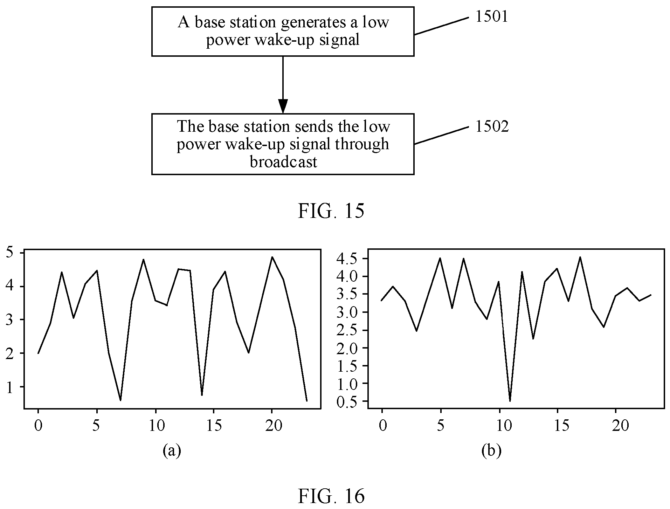

FIG. 15 is a schematic flowchart of a communication method according to an embodiment of this application. The method is performed by a base station or a chip used in the base station. The following uses an example in which the base station performs the method for description. The method includes the following steps.

Step 1501: The base station generates a low power wake-up signal.

The low power wake-up signal includes a plurality of OFDM symbols in time domain, each of the plurality of OFDM symbols carries one or more OOK symbols, each of the one or more OOK symbols corresponds to one time domain sequence, and the time domain sequence is used to implement frequency domain amplitude randomization.

For example, the low power wake-up signal includes three OFDM symbols in time domain: an OFDM symbol 1, an OFDM symbol 2, and an OFDM symbol 3, and each OFDM symbol carries two OOK symbols. Each OOK symbol corresponds to one time domain sequence. Time domain sequences corresponding to different OOK symbols may be the same or may be different. Lengths of the time domain sequences corresponding to the different OOK symbols may be the same or may be different.

For a specific implementation for carrying one or more OOK symbols on one OFDM symbol, refer to the descriptions of the embodiment in FIG. 14. Details are not described herein again.

For a generation method for the low power wake-up signal, refer to the descriptions of the embodiment in FIG. 14. A difference from the embodiment in FIG. 14 is: In the embodiment in FIG. 14, the time domain sequence corresponding to each OOK symbol is an all-1 sequence or an all-0 sequence. Therefore, after the time domain sequence is transformed to frequency domain, a case in which a spectrum is excessively centralized occurs. In the embodiment in FIG. 15, the time domain sequence corresponding to each OOK symbol can be used to implement frequency domain amplitude randomization. Therefore, after the time domain sequence is transformed to frequency domain, a spectrum is dispersed, and cases in (b) and (c) in FIG. 14 in which the spectrum is excessively centralized do not occur.

Step 1502: The base station sends the low power wake-up signal through broadcast.

In the foregoing solution, the low power wake-up signal sent by the base station includes the plurality of OFDM symbols, each OFDM symbol carries one or more OOK symbols, and each OOK symbol corresponds to one time domain sequence. Because the time domain sequence corresponding to each OOK symbol can be used to implement frequency domain amplitude randomization, after the time domain sequence is transformed to frequency domain, a spectrum is dispersed, and a case in which the spectrum is excessively centralized does not occur. This can avoid an impact caused by frequency selective fading, to help improve receiving performance of a receiving end for the low power wake-up signal.

In an implementation, the time domain sequence corresponding to each OOK symbol may be a ZC sequence, an LTE machine selection sequence, an NR machine selection sequence, or a sequence of another type that can be used to implement frequency domain amplitude randomization, for example, a pseudo-random sequence such as an m sequence.

The following provides different implementations for determining a type of a to be used time domain sequence.

Method 1: The base station determines the type of the time domain sequence based on a length of the time domain sequence.

For example, when the length of the time domain sequence is greater than a first threshold, the base station selects the type of the time domain sequence as the ZC sequence. When the length of the time domain sequence is less than or equal to the first threshold, the type of the time domain sequence is the machine selection sequence, and the machine selection sequence may be the LTE machine selection sequence or the NR machine selection sequence.

An example in which the first threshold is 24 is used. If the length of the time domain sequence is greater than 24, the base station selects to generate the OOK symbol by using the ZC sequence; or if the length of the time domain sequence is less than or equal to 24, the base station selects to generate the OOK symbol by using the LTE machine selection sequence or the NR machine selection sequence.

It should be noted that, because there is a specific couple relationship between the length of the time domain sequence and a length of a frequency domain sequence, for example, the time domain sequence on which IFFT is performed and a corresponding frequency domain sequence have a same length, or have a correspondence, the base station may also determine the type of the time domain sequence based on the length of the frequency domain sequence corresponding to the length of the time domain sequence on which IFFT is performed.

Method 2: It is predefined that a length of the time domain sequence corresponding to each OOK symbol is 12, and the time domain sequence is the LTE machine selection sequence.

Method 3: It is predefined that a length of the time domain sequence corresponding to each OOK symbol is 24, and the time domain sequence is the LTE machine selection sequence.

Method 4: It is predefined that a length of the time domain sequence corresponding to each OOK symbol is 6, and the time domain sequence is the NR machine selection sequence.

Method 5: It is predefined that a length of the time domain sequence corresponding to each OOK symbol is 12, and the time domain sequence is the NR machine selection sequence.

Method 6: It is predefined that a length of the time domain sequence corresponding to each OOK symbol is 18, and the time domain sequence is the NR machine selection sequence.

Method 7: It is predefined that a length of the time domain sequence corresponding to each OOK symbol is 24, and the time domain sequence is the NR machine selection sequence.

Method 8: It is predefined that a length of the time domain sequence corresponding to each OOK symbol is 30, and the time domain sequence is the NR machine selection sequence.

Method 9: The base station determines a length of the time domain sequence corresponding to each OOK symbol, and a predefined time domain sequence is the ZC sequence.

The following describes a generation manner for the time domain sequence with reference to specific examples.

Assuming that the length of the selected time domain sequence is 12 and the time domain sequence is the LTE machine selection sequence, the base station may select the time domain sequence with reference to FIG. 4. For example, if a selected sequence parameter $\mu=0$, $x_1(0)$, $x_1(1)$, ... , $x_1(11)$ corresponding to $\mu=0$ is substituted into Formula 4 to obtain a time domain sequence. If a selected sequence parameter $\mu=1$, $x_1(0)$, $x_1(1)$, ..., $x_1(11)$ corresponding to $\mu=1$ is substituted into Formula 4 to obtain another time domain sequence. Therefore, different $\mu$ values correspond to different time domain sequences, and all these time domain sequences are LTE machine selection sequences whose lengths are 12, and there are 30 different time domain sequences in total.

Assuming that the length of the selected time domain sequence is 24 and the time domain sequence is the LTE machine selection sequence, the base station may select the time domain sequence with reference to FIG. 5. For example, if a selected sequence parameter $\mu=0$, $x_1(0)$, $x_1(1)$, ... , $x_1(23)$ corresponding to $\mu=0$ is substituted into Formula 4 to obtain a time domain sequence. If a selected sequence parameter $\mu=1$, $x_1(0)$, $x_1(1)$, ..., $x_1(23)$ corresponding to $\mu=1$ is substituted into Formula 4 to obtain another time domain sequence. Therefore, different $\mu$ values correspond to different time domain sequences, and all these time domain sequences are LTE machine selection sequences whose lengths are 24, and there are 30 different time domain sequences in total.

In an implementation, the base station may pre-store a correspondence between a time domain sequence and a frequency domain sequence. Therefore, after selecting the time domain sequence, the base station does not need to perform an operation of transforming the time domain sequence to obtain a corresponding frequency domain sequence, but may directly obtain a pre-stored frequency domain sequence corresponding to the time domain sequence. Subsequently, a low power wake-up signal may be generated based on the frequency domain sequence. With reference to FIG. 14, if the base station does not store the correspondence between the time domain sequence and the frequency domain sequence, after determining the time domain sequence according to the foregoing method, the base station needs to perform an operation of transforming (a) in FIG. 14 to (b) in FIG. 14. However, according to the method in the present invention, the base station may pre-store the correspondence between the time domain sequence and the frequency domain sequence, so that the base station does not need to perform the operation of transforming (a) in FIG. 14 to (b) in FIG. 14. Instead, after determining the time domain sequence, the base station obtains the pre-stored frequency domain sequence corresponding to the time domain sequence from the base station, and then determines the low power wake-up signal based on the frequency domain sequence, that is, may directly start performing from (b) in FIG. 14.

FIG. 16 is an example diagram of a frequency-amplitude response obtained by transforming a time domain sequence that can be used to implement frequency domain amplitude randomization to frequency domain. In (a) in FIG.

16, a used time domain sequence is a ZC sequence, u=1, and there is no cyclic shift. It can be learned that, in comparison to (b) in FIG. 14, frequency power in (a) in FIG. 16 is dispersed and is not centralized on a single frequency, so that an impact caused by frequency selective fading can be avoided, to help improve receiving performance of a receiving end for a low power wake-up signal. Similarly, in (b) in FIG. 16, a used time domain sequence is an LTE machine selection sequence, u=0, and a length of the time domain sequence is 24. It can be learned that, in comparison to (b) in FIG. 14, frequency power in (b) in FIG. 16 is dispersed and is not centralized on a single frequency, so that an impact caused by frequency selective fading can be avoided, to help improve receiving performance of a receiving end for a low power wake-up signal.

In an implementation, before step 1501, the base station may further send, through broadcast, a synchronization parameter related to a synchronization signal. In addition, the low power wake-up signal in step 1501 includes the synchronization signal and a wake-up signal. The synchronization signal is indicated by at least one of OOK symbols corresponding to the plurality of OFDM symbols in step 1501, and the wake-up signal is used to wake up a UE. The synchronization parameter sent by the base station may be carried in a system message or dedicated radio resource control (radio resource control, RRC) signaling for sending.

The synchronization parameter includes a part or all of the following information.

(1) A length of a time domain sequence corresponding to the synchronization signal.

(2) A sending cycle (in units of second, frame, subframe, slot, symbol, and the like) of a time domain sequence corresponding to the synchronization signal, and a start time point of the time domain sequence in each sending cycle (for example, a slot in which the time domain sequence starts to be sent in each cycle).

(3) Sequence parameters of time domain sequences corresponding to a plurality of OFDM symbols included in the low power wake-up signal in time domain.

(4) A time-varying rule of sequence parameters of time domain sequences corresponding to a plurality of OFDM symbols included in the low power wake-up signal in time domain.

The time-varying rule refers to a change rule that a sequence parameter ($\mu$) varies with time (t), that is, $\mu$ = f(t). For example, $\mu$ = t mod M. t represents current system time of the UE, and is in a unit of a slot, mod represents a modulo operation, and M represents the length of the time domain sequence.

Because the sequence parameter may change, the time domain sequence also changes, so that interference randomization on a neighboring cell can be implemented, and an impact caused by frequency selective fading is reduced.

(5) When the time domain sequence is the ZC sequence, the synchronization parameter further includes cyclic shift (cyclic shift, CS) values of ZC sequences corresponding to the plurality of OFDM symbols, or a time-varying rule of cyclic shift values of ZC sequences corresponding to the plurality of OFDM symbols. The time-varying rule refers to a change rule that a cyclic shift value (cs) varies with time (t), that is, cs = f(t).

In an implementation, a sequence parameter of the time domain sequence corresponding to at least one of OOK symbols carried on the plurality of OFDM symbols in step 1501 may form indication information, and the indication information indicates at least one of the following information: identification information of a cell (for example, a cell ID, including all or some bits of the cell ID), whether system information of the cell changes, and earthquake and tsunami warning information. The cell is a cell in which the low power wake-up signal is sent through broadcast, or may be a neighboring cell of the cell that sends the low power wake-up signal. The indication information may further include other information, for example, whether paging exists or whether random access needs to be performed, which belongs to protection content of the present invention.

The following provides descriptions by using an example. It is assumed that the low power wake-up signal in step 1501 includes three OFDM symbols in time domain: an OFDM symbol 1, an OFDM symbol 2, and an OFDM symbol 3, and each OFDM symbol carries two OOK symbols. It is assumed that the used time domain sequence is the LTE machine selection sequence, and a length of the time domain sequence is 12. In other words, OOK symbols respectively corresponding to the three OFDM symbols may be generated according to the example in FIG. 4.

It is assumed that bit information of the six OOK symbols for representation is "110011". Two OOK symbols corresponding to the OFDM symbol 1 are used to represent "11", two OOK symbols corresponding to the OFDM symbol 2 are used to represent "00", and two OOK symbols corresponding to the OFDM symbol 3 are used to represent "11". Sequence parameters $\mu$ respectively corresponding to the two OOK symbols corresponding to the OFDM symbol 1 are 1 and 2, and sequence parameters $\mu$ respectively corresponding to the two OOK symbols corresponding to the OFDM symbol 3 are 1 and 3. Because the two OOK symbols corresponding to the OFDM symbol 2 are used to represent "00", a corresponding time domain sequence is an all-0 sequence, and the sequence parameter does not need to be used to generate the time domain sequence. Therefore, the four $\mu$ values may form the indication information "1213".

It is assumed that both the base station and the UE pre-store meanings of the indication information shown in Table 1, and the UE may determine, according to Table 1, the meanings indicated by the indication information.

Table 1

| Indication information ($\mu_0$, $\mu_1$, $\mu_2$, $\mu_3$) | Identification information of a cell |
|---|---|
| 1, 1, 1, 1 | ID of a cell 1 |
| 1, 2, 1, 3 | ID of a cell 2 |
| 3, 3, 3, 3 | ID of a cell 3 |

The foregoing example may also be extended to one or more OOK symbols included in one OFDM symbol. Details are not described in the present invention.

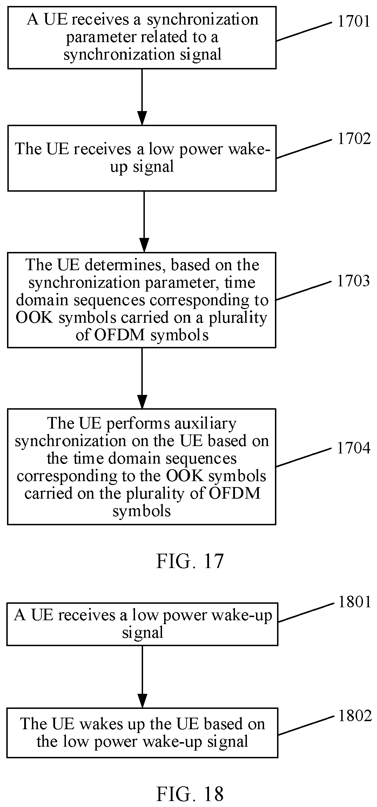

The following describes operations performed by the UE with reference to FIG. 17 and FIG. 18.

FIG. 17 is a schematic flowchart of a communication method according to an embodiment of this application. The method includes the following steps.

Step 1701: A UE receives a synchronization parameter related to a synchronization signal.

Step 1702: The UE receives a low power wake-up signal.

Step 1703: The UE determines, based on the synchronization parameter, time domain sequences corresponding to OOK symbols carried on a plurality of OFDM symbols.

Step 1704: The UE performs auxiliary synchronization on the UE based on the time domain sequences corresponding to OOK symbols carried on the plurality of OFDM symbols.

For meanings and functions of the low power wake-up signal, the synchronization signal, the synchronization signal, the synchronization parameter, and the time domain sequence, refer to the embodiment in FIG. 15. Details are not described again.

After the UE receives the synchronization parameter related to the synchronization signal and the low power wake-up signal, if a main receiver of the UE is in a normal operating state, and the synchronization parameter includes sequence parameters of the time domain sequences corresponding to the OOK symbols carried on the plurality of OFDM symbols, or includes a time-varying rule of sequence parameters of the time domain sequences corresponding to the OOK symbols carried on the plurality of OFDM symbols, the main receiver of the UE may determine the time domain sequences corresponding to the OOK symbols carried on the plurality of OFDM symbols. That is, the main receiver of the UE can obtain precise values of the time domain sequences corresponding to the OOK symbols carried on the plurality of OFDM symbols, so that the UE can perform auxiliary synchronization on the UE based on the time domain sequences corresponding to the OOK symbols carried on the plurality of OFDM symbols. For example, the UE performs one or more of the following operations on the UE based on the time domain sequences corresponding to the OOK symbols carried on the plurality of OFDM symbols: time-frequency offset estimation, automatic gain control, signal-to-noise ratio estimation, or mobility measurement. The mobility measurement includes channel quality measurement of an intra-frequency serving cell or a camped cell, channel quality measurement of an intra-frequency non-serving cell or a non-camped cell, channel quality measurement of an inter-frequency non-serving cell or a non-camped cell, and the like. Before measurement of the non-serving cell or the non-camped cell is performed, the UE needs to receive broadcast signaling of a corresponding cell and including a sequence parameter corresponding to an OOK synchronization signal. This helps implement precise time synchronization of the UE and improve receiving performance of the main receiver of the UE.

FIG. 18 is a schematic flowchart of a communication method according to an embodiment of this application. The method includes the following steps.

Step 1801: A UE receives a low power wake-up signal.

Step 1802: The UE wakes up the UE based on the low power wake-up signal.

For meanings and functions of the low power wake-up signal, refer to the embodiment in FIG. 15. Details are not described again.

The UE may wake up a main receiver of the UE based on the low power wake-up signal.

In addition, the UE may further perform detection on an OOK symbol carried on the low power wake-up signal, and determine a time domain sequence corresponding to the OOK symbol carried on the low power wake-up signal. Then, the UE determines indication information based on a sequence parameter corresponding to the detected time domain sequence, and further determines meanings indicated by the indication information. To be specific, the UE has a function of performing detection on a precise value of the time domain sequence corresponding to the OOK symbol, then determines, based on the time domain sequence corresponding to the detected OOK symbol, a sequence parameter $\mu$ corresponding to the time domain sequence, and further determines corresponding meanings based on indication information formed by values of a plurality of sequence parameters.

For example, the UE stores the foregoing Table 1. When the UE in an idle state receives the low power wake-up signal and determines that the low power wake-up signal is sent to the UE, the UE wakes up the main receiver of the UE, and the UE may perform detection on a time domain sequence corresponding to the low power wake-up signal and determine a sequence parameter corresponding to the detected time domain sequence. For example, if it is determined that the sequence parameters μ are 1, 2, 1, and 3 in sequence, the UE may determine, according to Table 1, that the indication information (namely, 1213) formed by the sequence parameters indicates that a cell on which the UE currently camps is a cell 2. After determining the cell on which the UE currently camps, the UE may determine whether to perform cell reselection.

It should be noted that, in another implementation, the "OOK symbol" described above in embodiments of this application may also be replaced with a frequency shift keying (frequency shift keying, FSK) symbol. An implementation of the frequency shift keying symbol is similar to the foregoing method, and details are not described again.

It may be understood that in embodiments of this application, a terminal device and/or a network device may perform some or all of steps in embodiments of this application. These steps or operations are merely examples. In embodiments of this application, other operations or variations of various operations may be further performed. In addition, the steps may be performed in different sequences presented in embodiments of this application, and not all the operations in embodiments of this application may need to be performed.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

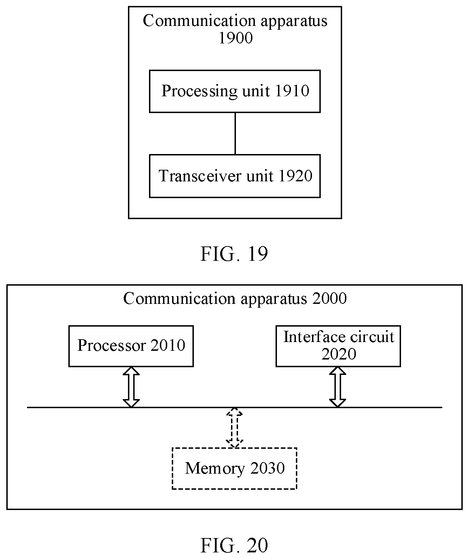

FIG. 19 and FIG. 20 are diagrams of structures of possible communication apparatuses according to an embodiment of this application. The communication apparatuses may be configured to implement functions of the terminal device or the network device in the foregoing method embodiment, and therefore can also implement the beneficial effects in the foregoing method embodiments. In embodiments of this application, the communication apparatus may be the terminal device shown in FIG. 1, the network device shown in FIG. 1, or a module (for example, a chip) used in the terminal device or the network device.

As shown in FIG. 19, the communication apparatus 1900 includes a processing unit 1910 and a transceiver unit 1920. The communication apparatus 1900 is configured to implement the functions of the terminal device or the network device in the foregoing method embodiments.

When the communication apparatus 1900 is configured to implement the functions of the network device in the foregoing method embodiments, the processing unit 1910 is configured to generate a low power wake-up signal; and the transceiver unit 1920 is configured to send the low power wake-up signal through broadcast, where the low power wake-up signal includes a plurality of OFDM symbols in time domain, each of the plurality of OFDM symbols carries a plurality of OOK symbols, each of the plurality of OOK symbols corresponds to one time domain sequence, and the time domain sequence is used to implement frequency domain amplitude randomization.

In a possible implementation, the processing unit 1910 is further configured to determine a type of the time domain sequence based on a length of the time domain sequence.

In a possible implementation, when the length of the time domain sequence is greater than a first threshold, the type of the time domain sequence is a ZC sequence; and when the length of the time domain sequence is less than or equal to the first threshold, the type of the time domain sequence is a machine selection sequence.

In a possible implementation, a length of the time domain sequence is 12 or 24, and the time domain sequence is an LTE machine selection sequence.

In a possible implementation, a length of the time domain sequence is 6, 12, 18, 24, or 30, and a type of the time domain sequence is an NR machine selection sequence.

In a possible implementation, a type of the time domain sequence is a ZC sequence.

In a possible implementation, the processing unit 1910 is specifically configured to obtain a pre-stored frequency domain sequence corresponding to the time domain sequence; and generate the low power wake-up signal based on the frequency domain sequence.

In a possible implementation, the low power wake-up signal includes a synchronization signal, and the synchronization signal is indicated by at least one of OOK symbols corresponding to the plurality of OFDM symbols; and the processing unit 1910 is further configured to send, through broadcast, a synchronization parameter related to the synchronization signal, where the synchronization parameter includes sequence parameters of time domain sequences corresponding to OOK symbols carried on the plurality of OFDM symbols, or a time-varying rule of sequence parameters of time domain sequences corresponding to OOK symbols carried on the plurality of OFDM symbols.

In a possible implementation, when the time domain sequence is a ZC sequence, the synchronization parameter further includes cyclic shift values of ZC sequences corresponding to the OOK symbols carried on the plurality of OFDM symbols, or a time-varying rule of cyclic shift values of ZC sequences corresponding to the OOK symbols carried on the plurality of OFDM symbols.

In a possible implementation, a sequence parameter of the time domain sequence corresponding to at least one of OOK symbols carried on the plurality of OFDM symbols forms indication information, and the indication information indicates at least one of the following information: identification information of a cell, whether system information of the cell changes, and earthquake and tsunami warning information, where the cell is a cell in which the low power wake-up signal is sent through broadcast.

When the communication apparatus 1900 is configured to implement the functions of the terminal device in the foregoing method embodiments, the transceiver unit 1920 is configured to receive a synchronization parameter related to a synchronization signal; receive a low power wake-up signal, where the low power wake-up signal includes the synchronization signal, the low power wake-up signal includes a plurality of OFDM symbols in time domain, each of the plurality of OFDM symbols carries a plurality of OOK symbols, each of the plurality of OOK symbols corresponds to one time domain sequence, the time domain sequence is used to implement frequency domain amplitude randomization, and the synchronization signal is indicated by at least one of OOK symbols corresponding to the plurality of OFDM symbols; and the processing unit 1910 is configured to determine, based on the synchronization parameter, time domain sequences corresponding to OOK symbols carried on the plurality of OFDM symbols; and perform auxiliary synchronization on the terminal device based on the time domain sequences corresponding to the OOK symbols carried on the plurality of OFDM symbols.

In a possible implementation, the synchronization parameter includes sequence parameters of the time domain sequences corresponding to the OOK symbols carried on the plurality of OFDM symbols, or a time-varying rule of sequence parameters of the time domain sequences corresponding to the OOK symbols carried on the plurality of OFDM symbols.

In a possible implementation, when the time domain sequence is a ZC sequence, the synchronization parameter further includes cyclic shift values of ZC sequences corresponding to the OOK symbols carried on the plurality of OFDM symbols, or a time-varying rule of cyclic shift values of ZC sequences corresponding to the OOK symbols carried on the plurality of OFDM symbols.

In a possible implementation, the processing unit 1910 is specifically configured to perform one or more of the following operations on the terminal device based on the time domain sequences corresponding to the OOK symbols carried on the plurality of OFDM symbols: time-frequency offset estimation, automatic gain control, signal-to-noise ratio estimation, or mobility measurement.

In a possible implementation, the time domain sequence is a ZC sequence or a machine selection sequence.

When the communication apparatus 1900 is configured to implement the functions of the terminal device in the foregoing method embodiments, the transceiver unit 1920 is configured to receive a low power wake-up signal; and the processing unit 1910 is configured to wake up the terminal device based on the low power wake-up signal, where the low power wake-up signal includes a plurality of OFDM symbols in time domain, each of the plurality of OFDM symbols carries a plurality of OOK symbols, each of the plurality of OOK symbols corresponds to one time domain sequence, and the time domain sequence is used to implement frequency domain amplitude randomization.

In a possible implementation, the processing unit 1910 is further configured to perform detection on OOK symbols carried on the low power wake-up signal, and determine time domain sequences corresponding to the OOK symbols carried on the low power wake-up signal; and determine indication information based on sequence parameters corresponding to the detected time domain sequences.

In a possible implementation, the indication information indicates at least one of the following information: identification information of a cell, whether system information of the cell changes, and earthquake and tsunami warning information, where the cell is a cell in which the low power wake-up signal is sent through broadcast.

In a possible implementation, the time domain sequence is a ZC sequence or a machine selection sequence.

For more detailed descriptions about the processing unit 1910 and the transceiver unit 1920, directly refer to related descriptions in the foregoing method embodiments. Details are not described herein again.

As shown in FIG. 20, a communication apparatus 2000 includes a processor 2010 and an interface circuit 2020. The processor 2010 and the interface circuit 2020 are coupled to each other. It can be understood that, the interface circuit 2020 may be a transceiver or an input/output interface. Optionally, the communication apparatus 2000 may further include a memory 2030, configured to store instructions executed by the processor 2010, store input data required for executing the instructions by the processor 2010, or store data generated after the processor 2010 executes the instructions.

When the communication apparatus 2000 is configured to implement the foregoing method embodiments, the processor 2010 is configured to implement a function of the processing unit 1910, and the interface circuit 2020 is configured to implement a function of the transceiver unit 1920.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device; or the chip in the terminal device sends information to another module (for example, a radio frequency module or an antenna) in the terminal device, where the information is sent by the terminal device to a network device.

When the communication apparatus is a module used in the network device, the module in the network device implements a function of the network device in the foregoing method embodiments. The module in the network device receives information from another module (for example, a radio frequency module or an antenna) in the network device, where the information is sent by the terminal device to the network device; or the module in the network device sends information to another module (for example, a radio frequency module or an antenna) in the network device, where the information is sent by the network device to the terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may be formed by corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may also be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. The computer program (English: computer program) is a set of instructions that indicate each step of an electronic computer or another device having a message processing capability, and is usually written in a program design language and runs on a target architecture. When the computer program or the instructions are loaded and executed on a computer, all or some of the procedures or functions in embodiments of this application are performed. The computer may be a general-purpose computer, a dedicated computer, a computer network, a network device, a terminal device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

    generating, by a network device, a low power wake-up signal; and
    sending, by the network device, the low power wake-up signal through broadcast, wherein
    the low power wake-up signal comprises a plurality of orthogonal frequency division multiplexing OFDM symbols in time domain, each of the plurality of OFDM symbols carries a plurality of on-off keying OOK symbols, each of the plurality of OOK symbols corresponds to one time domain sequence, and the time domain sequence is used to implement frequency domain amplitude randomization.

2. The method according to claim 1, wherein the method further comprises:
    determining, by the network device, a type of the time domain sequence based on a length of the time domain sequence.

3. The method according to claim 2, wherein

    when the length of the time domain sequence is greater than a first threshold, the type of the time domain sequence is a ZC sequence; and
    when the length of the time domain sequence is less than or equal to the first threshold, the type of the time domain sequence is a machine selection sequence.

4. The method according to claim 1, wherein a length of the time domain sequence is 12 or 24, and the time domain sequence is a long term evolution LTE machine selection sequence.

5. The method according to claim 1, wherein a length of the time domain sequence is 6, 12, 18, 24, or 30, and a type of the time domain sequence is a new radio NR machine selection sequence.

6. The method according to claim 1, wherein a type of the time domain sequence is a ZC sequence.

7. The method according to any one of claims 1 to 6, wherein the generating, by a network device, a low power wake-up signal comprises:

    obtaining, by the network device, a pre-stored frequency domain sequence corresponding to the time domain sequence; and
    generating, by the network device, the low power wake-up signal based on the frequency domain sequence.

8. The method according to any one of claims 1 to 7, wherein the low power wake-up signal comprises a synchronization signal, and the synchronization signal is indicated by at least one of OOK symbols corresponding to the plurality of OFDM symbols; and
    the method further comprises:

    sending, by the network device through broadcast, a synchronization parameter related to the synchronization signal, wherein
    the synchronization parameter comprises sequence parameters of time domain sequences corresponding to OOK symbols carried on the plurality of OFDM symbols, or a time-varying rule of sequence parameters of time domain sequences corresponding to OOK symbols carried on the plurality of OFDM symbols.

9. The method according to claim 8, wherein
    when the time domain sequence is the ZC sequence, the synchronization parameter further comprises cyclic shift values of ZC sequences corresponding to the plurality of OFDM symbols, or a time-varying rule of cyclic shift values of ZC sequences corresponding to the plurality of OFDM symbols.

10. The method according to any one of claims 1 to 7, wherein

    a sequence parameter of a time domain sequence corresponding to at least one of OOK symbols carried on the plurality of OFDM symbols forms indication information, and the indication information indicates at least one of the following information: identification information of a cell, whether system information of the cell changes, and earthquake and tsunami warning information, wherein
the cell is a cell in which the low power wake-up signal is sent through broadcast.

**11.** A communication method, comprising:

receiving, by a terminal device, a synchronization parameter related to a synchronization signal;
receiving, by the terminal device, a low power wake-up signal, wherein the low power wake-up signal comprises the synchronization signal, the low power wake-up signal comprises a plurality of orthogonal frequency division multiplexing OFDM symbols in time domain, each of the plurality of OFDM symbols carries a plurality of on-off keying OOK symbols, each of the plurality of OOK symbols corresponds to one time domain sequence, the time domain sequence is used to implement frequency domain amplitude randomization, and the synchronization signal is indicated by at least one of OOK symbols corresponding to the plurality of OFDM symbols;
determining, by the terminal device based on the synchronization parameter, time domain sequences corresponding to OOK symbols carried on the plurality of OFDM symbols; and
performing, by the terminal device, auxiliary synchronization on the terminal device based on the time domain sequences corresponding to the OOK symbols carried on the plurality of OFDM symbols.

**12.** The method according to claim 11, wherein
the synchronization parameter comprises sequence parameters of the time domain sequences corresponding to the OOK symbols carried on the plurality of OFDM symbols, or a time-varying rule of sequence parameters of the time domain sequences corresponding to the OOK symbols carried on the plurality of OFDM symbols.

**13.** The method according to claim 11 or 12, wherein
when the time domain sequence is a ZC sequence, the synchronization parameter further comprises cyclic shift values of ZC sequences corresponding to the OOK symbols carried on the plurality of OFDM symbols, or a time-varying rule of cyclic shift values of ZC sequences corresponding to the OOK symbols carried on the plurality of OFDM symbols.

**14.** The method according to any one of claims 11 to 13, wherein the performing, by the terminal device, auxiliary synchronization on the terminal device based on the time domain sequences corresponding to the OOK symbols carried on the plurality of OFDM symbols comprises:
performing, by the terminal device, one or more of the following operations on the terminal device based on the time domain sequences corresponding to the OOK symbols carried on the plurality of OFDM symbols: time-frequency offset estimation, automatic gain control, signal-to-noise ratio estimation, or mobility measurement.

**15.** The method according to any one of claims 11 to 14, wherein the time domain sequence is a ZC sequence or a machine selection sequence.

**16.** A communication method, comprising:

receiving, by a terminal device, a low power wake-up signal; and
waking up, by the terminal device, the terminal device based on the low power wake-up signal, wherein
the low power wake-up signal comprises a plurality of orthogonal frequency division multiplexing OFDM symbols in time domain, each of the plurality of OFDM symbols carries a plurality of on-off keying OOK symbols, each of the plurality of OOK symbols corresponds to one time domain sequence, and the time domain sequence is used to implement frequency domain amplitude randomization.

**17.** The method according to claim 16, wherein the method further comprises:

performing, by the terminal device, detection on OOK symbols carried on the low power wake-up signal, and determining time domain sequences corresponding to the OOK symbols carried on the low power wake-up signal; and
determining, by the terminal device, indication information based on sequence parameters corresponding to the detected time domain sequences.

**18.** The method according to claim 17, wherein the indication information indicates at least one of the following information: identification information of a cell, whether system information of the cell changes, and earthquake and tsunami warning information, wherein

the cell is a cell in which the low power wake-up signal is sent through broadcast.

19. The method according to any one of claims 16 to 18, wherein the time domain sequence is a ZC sequence or a machine selection sequence.

20. A communication apparatus, comprising a processor and an interface circuit, wherein the processor is configured to communicate with another apparatus through the interface circuit, and perform the method according to any one of claims 1 to 10, or perform the method according to any one of claims 11 to 15, or perform the method according to any one of claims 16 to 19.

21. A communication apparatus, comprising a processor coupled to a memory, wherein the processor is configured to invoke a program stored in the memory, to perform the method according to any one of claims 1 to 10, or perform the method according to any one of claims 11 to 15, or perform the method according to any one of claims 16 to 19.

22. A communication apparatus, comprising a processor and a memory, wherein the memory is configured to store computer instructions; and when the communication apparatus is run, the processor executes the computer instructions stored in the memory, to perform the method according to any one of claims 1 to 10, or perform the method according to any one of claims 11 to 15, or perform the method according to any one of claims 16 to 19.

23. A computer program product, wherein the computer program product comprises a computer program or instructions; and when the computer program or the instructions are run on a processor, the processor is enabled to perform the method according to any one of claims 1 to 10, or perform the method according to any one of claims 11 to 15, or perform the method according to any one of claims 16 to 19.

24. A computer-readable storage medium, wherein the storage medium stores a computer program or instructions; and when the computer program or the instructions are executed by a communication apparatus, the method according to any one of claims 1 to 10 is implemented, or the method according to any one of claims 11 to 15 is implemented, or the method according to any one of claims 16 to 19 is implemented.

FIG. 1

FIG. 2

(a)

(b)

(c)

FIG. 3

| $u$ | $\varphi(0), \ldots, \varphi(11)$ | | | | | | | | | | | |
|---|---|---|---|---|---|---|---|---|---|---|---|---|
| 0 | −1 | 1 | 3 | −3 | 3 | 3 | 1 | 1 | 3 | 1 | −3 | 3 |
| 1 | 1 | 1 | 3 | 3 | 3 | −1 | 1 | −3 | −3 | 1 | −3 | 3 |
| 2 | 1 | 1 | −3 | −3 | −3 | −1 | −3 | −3 | 1 | −3 | 1 | −1 |
| 3 | −1 | 1 | 1 | 1 | 1 | −1 | −3 | −3 | 1 | −3 | 3 | −1 |
| 4 | −1 | 3 | 1 | −1 | 1 | −1 | −3 | −1 | 1 | −1 | 1 | 3 |
| 5 | 1 | −3 | 3 | −1 | −1 | 1 | 1 | −1 | −1 | 3 | −3 | 1 |
| 6 | −1 | 3 | −3 | −3 | −3 | 3 | 1 | −1 | 3 | 3 | −3 | 1 |
| 7 | −3 | −1 | −1 | −1 | 1 | −3 | 3 | −1 | 1 | −3 | 3 | 1 |
| 8 | 1 | −3 | 3 | 1 | −1 | −1 | −1 | 1 | 1 | 3 | −1 | 1 |
| 9 | 1 | −3 | −1 | 3 | 3 | −1 | −3 | 1 | 1 | 1 | 1 | 1 |
| 10 | −1 | 3 | −1 | 1 | 1 | −3 | −3 | −1 | −3 | −3 | 3 | −1 |
| 11 | 3 | 1 | −1 | −1 | 3 | 3 | −3 | 1 | 3 | 1 | 3 | 3 |
| 12 | 1 | −3 | 1 | 1 | −3 | 1 | 1 | 1 | −3 | −3 | −3 | 1 |
| 13 | 3 | 3 | −3 | 3 | −3 | 1 | 1 | 3 | −1 | −3 | 3 | 3 |
| 14 | −3 | 1 | −1 | −3 | −1 | 3 | 1 | 3 | 3 | 3 | −1 | 1 |
| 15 | 3 | −1 | 1 | −3 | −1 | −1 | 1 | 1 | 3 | 1 | −1 | −3 |
| 16 | 1 | 3 | 1 | −1 | 1 | 3 | 3 | 3 | −1 | −1 | 3 | −1 |
| 17 | −3 | 1 | 1 | 3 | −3 | 3 | −3 | −3 | 3 | 1 | 3 | −1 |
| 18 | −3 | 3 | 1 | 1 | −3 | 1 | −3 | −3 | −1 | −1 | 1 | −3 |
| 19 | −1 | 3 | 1 | 3 | 1 | −1 | −1 | 3 | −3 | −1 | −3 | −1 |
| 20 | −1 | −3 | 1 | 1 | 1 | 1 | 3 | 1 | −1 | 1 | −3 | −1 |
| 21 | −1 | 3 | −1 | 1 | −3 | −3 | −3 | −3 | −3 | 1 | −1 | −3 |
| 22 | 1 | 1 | −3 | −3 | −3 | −3 | −1 | 3 | −3 | 1 | −3 | 3 |
| 23 | 1 | 1 | −1 | −3 | −1 | −3 | 1 | −1 | 1 | 3 | −1 | 1 |
| 24 | 1 | 1 | 3 | 1 | 3 | 3 | −1 | 1 | −1 | −3 | −3 | 1 |
| 25 | 1 | −3 | 3 | 3 | 1 | 3 | 3 | 1 | −3 | −1 | −1 | 3 |
| 26 | 1 | 3 | −3 | −3 | 3 | −3 | 1 | −1 | −1 | 3 | −1 | −3 |
| 27 | −3 | −1 | −3 | −1 | −3 | 3 | 1 | −1 | 1 | 3 | −3 | −3 |
| 28 | −1 | 3 | −3 | 3 | −1 | 3 | 3 | −3 | 3 | 3 | −1 | −1 |
| 29 | 3 | −3 | −3 | −1 | −1 | −3 | −1 | 3 | −3 | 3 | 1 | −1 |

FIG. 4

| $u$ | $\varphi(0),\ldots,\varphi(23)$ | | | | | | | | | | | | | | | | | | | | | | | |
|---|---|---|---|---|---|---|---|---|---|---|---|---|---|---|---|---|---|---|---|---|---|---|---|---|
| 0 | -1 | 3 | 1 | -3 | 3 | -1 | 1 | 3 | -3 | 3 | 1 | 3 | -3 | 3 | 1 | 1 | -1 | 1 | 3 | -3 | 3 | -3 | -1 | -3 |
| 1 | -3 | 3 | -3 | -3 | -3 | 1 | -3 | -3 | 3 | -1 | 1 | 1 | 1 | 3 | 1 | -1 | 3 | -3 | -3 | 1 | 3 | 1 | 1 | -3 |
| 2 | 3 | -1 | 3 | 3 | 1 | 1 | -3 | 3 | 3 | 3 | 3 | 1 | -1 | 3 | -1 | 1 | 1 | -1 | -3 | -1 | -1 | 1 | 3 | 3 |
| 3 | -1 | -3 | 1 | 1 | 3 | -3 | 1 | 1 | -3 | -1 | -1 | 1 | 3 | 1 | 3 | 1 | -1 | 3 | 1 | 1 | -3 | -1 | -3 | -1 |
| 4 | -1 | -1 | -1 | -3 | -3 | -1 | 1 | 1 | 3 | 3 | -1 | 3 | -1 | 1 | -1 | -3 | 1 | -1 | -3 | -3 | 1 | -3 | -1 | -1 |
| 5 | -3 | 1 | 1 | 3 | -1 | 1 | 3 | 1 | -3 | 1 | -3 | 1 | 1 | -1 | -1 | 3 | -1 | -3 | 3 | -3 | -3 | -3 | 1 | 1 |
| 6 | 1 | 1 | -1 | -1 | 3 | -3 | -3 | 3 | -3 | 1 | -1 | -1 | 1 | -1 | 1 | 1 | -1 | -3 | -1 | 1 | -1 | 3 | -1 | -3 |
| 7 | -3 | 3 | 3 | -1 | -1 | -3 | -1 | 3 | 1 | 3 | 1 | 3 | 1 | 1 | -1 | 3 | 1 | -1 | 1 | 3 | -3 | -1 | -1 | 1 |
| 8 | -3 | 1 | 3 | -3 | 1 | -1 | -3 | 3 | -3 | 3 | -1 | -1 | -1 | -1 | 1 | -3 | -3 | -3 | 1 | -3 | -3 | -3 | 1 | -3 |
| 9 | 1 | 1 | -3 | 3 | 3 | -1 | -3 | -1 | 3 | -3 | 3 | 3 | 3 | -1 | 1 | 1 | -3 | 1 | -1 | 1 | 1 | -3 | 1 | 1 |
| 10 | -1 | 1 | -3 | -3 | 3 | -1 | 3 | -1 | -1 | -3 | -3 | -3 | -1 | -3 | -3 | 1 | -1 | 1 | 3 | 3 | -1 | 1 | -1 | 3 |
| 11 | 1 | 3 | 3 | -3 | -3 | 1 | 3 | 1 | -1 | -3 | -3 | -3 | 3 | 3 | -3 | 3 | 3 | -1 | -3 | 3 | -1 | 1 | -3 | 1 |
| 12 | 1 | 3 | 3 | 1 | 1 | 1 | -1 | -1 | 1 | -3 | 3 | -1 | 1 | 1 | -3 | 3 | 3 | -1 | -3 | 3 | -3 | -1 | -3 | -1 |
| 13 | 3 | -1 | -1 | -1 | -1 | -3 | -1 | 3 | 3 | 1 | -1 | 1 | 3 | 3 | 3 | -1 | 1 | 1 | -3 | 1 | 3 | -1 | -3 | 3 |
| 14 | -3 | -3 | 3 | 1 | 3 | 1 | -3 | 3 | 1 | 3 | 1 | 1 | 3 | 3 | -1 | -1 | -3 | 1 | -3 | -1 | 3 | 1 | 1 | 3 |
| 15 | -1 | -1 | 1 | -3 | 1 | 3 | -3 | 1 | -1 | -3 | -1 | 3 | 1 | 3 | 1 | -1 | -3 | -3 | -1 | -1 | -3 | -3 | -3 | -1 |
| 16 | -1 | -3 | 3 | -1 | -1 | -1 | -1 | 1 | 1 | -3 | 3 | 1 | 3 | 3 | 1 | -1 | 1 | -3 | 1 | -3 | 1 | 1 | -3 | -1 |
| 17 | 1 | 3 | -1 | 3 | 3 | -1 | -3 | 1 | -1 | -3 | 3 | 3 | 3 | -1 | 1 | 1 | 3 | -1 | -3 | -1 | 3 | -1 | -1 | -1 |
| 18 | 1 | 1 | 1 | 1 | 1 | -1 | 3 | -1 | -3 | 1 | 1 | 3 | -3 | 1 | -3 | -1 | 1 | 1 | -3 | -3 | 3 | 1 | 1 | -3 |
| 19 | 1 | 3 | 3 | 1 | -1 | -3 | 3 | -1 | 3 | 3 | 3 | -3 | 1 | -1 | 1 | -1 | -3 | -1 | 1 | 3 | -1 | 3 | -3 | -3 |
| 20 | -1 | -3 | 3 | -3 | -3 | -3 | -1 | -1 | -3 | -1 | -3 | 3 | 1 | 3 | -3 | -1 | 3 | -1 | 1 | -1 | 3 | -3 | 1 | -1 |
| 21 | -3 | -3 | 1 | 1 | -1 | 1 | -1 | 1 | -1 | 3 | 1 | -3 | -1 | 1 | -1 | 1 | -1 | -1 | 3 | 3 | -3 | -1 | 1 | -3 |
| 22 | -3 | -1 | -3 | 3 | 1 | -1 | -3 | -1 | -3 | -3 | 3 | -3 | 3 | -3 | -1 | 1 | 3 | 1 | -3 | 1 | 3 | 3 | -1 | -3 |
| 23 | -1 | -1 | -1 | -1 | 3 | 3 | 3 | 1 | 3 | 3 | -3 | 1 | 3 | -1 | 3 | -1 | 3 | 3 | -3 | 3 | 1 | -1 | 3 | 3 |
| 24 | 1 | -1 | 3 | 3 | -1 | -3 | 3 | -3 | -1 | -1 | 3 | -1 | 3 | -1 | -1 | 1 | 1 | 1 | 1 | -1 | -1 | -3 | -1 | 3 |
| 25 | 1 | -1 | 1 | -1 | 3 | -1 | 3 | 1 | 1 | -1 | -1 | -3 | 1 | 1 | -3 | 1 | 3 | -3 | 1 | 1 | -3 | -3 | -1 | -1 |
| 26 | -3 | -1 | 1 | 3 | 1 | 1 | -3 | -1 | -1 | -3 | 3 | -3 | 3 | 1 | -3 | 3 | -3 | 1 | -1 | 1 | -3 | 1 | 1 | 1 |
| 27 | -1 | -3 | 3 | 3 | 1 | 1 | 3 | -1 | -3 | -1 | -1 | -1 | 3 | 1 | -3 | -3 | -1 | 3 | -3 | -1 | -3 | -1 | -3 | -1 |
| 28 | -1 | -3 | -1 | -1 | 1 | -3 | -1 | -1 | 1 | -1 | -3 | 1 | 1 | -3 | 1 | -3 | -3 | 3 | 1 | 1 | -1 | 3 | -1 | -1 |
| 29 | 1 | 1 | -1 | -1 | -3 | -1 | 3 | -1 | 3 | -1 | 1 | 3 | 1 | -1 | 3 | 1 | 3 | -3 | -3 | 1 | -1 | -1 | 1 | 3 |

FIG. 5

| $u$ | $\varphi(0),..., \varphi(5)$ | | | | | |
|---|---|---|---|---|---|---|
| 0 | −3 | −1 | 3 | 3 | −1 | −3 |
| 1 | −3 | 3 | −1 | −1 | 3 | −3 |
| 2 | −3 | −3 | −3 | 3 | 1 | −3 |
| 3 | 1 | 1 | 1 | 3 | −1 | −3 |
| 4 | 1 | 1 | 1 | −3 | −1 | 3 |
| 5 | −3 | 1 | −1 | −3 | −3 | −3 |
| 6 | −3 | 1 | 3 | −3 | −3 | −3 |
| 7 | −3 | −1 | 1 | −3 | 1 | −1 |
| 8 | −3 | −1 | −3 | 1 | −3 | −3 |
| 9 | −3 | −3 | 1 | −3 | 3 | −3 |
| 10 | −3 | 1 | 3 | 1 | −3 | −3 |
| 11 | −3 | −1 | −3 | 1 | 1 | −3 |
| 12 | 1 | 1 | 3 | −1 | −3 | 3 |
| 13 | 1 | 1 | 3 | 3 | −1 | 3 |
| 14 | 1 | 1 | 1 | −3 | 3 | −1 |
| 15 | 1 | 1 | 1 | −1 | 3 | −3 |
| 16 | −3 | −1 | −1 | −1 | 3 | −1 |
| 17 | −3 | −3 | −1 | 1 | −1 | −3 |
| 18 | −3 | −3 | −3 | 1 | −3 | −1 |
| 19 | −3 | 1 | 1 | −3 | −1 | −3 |
| 20 | −3 | 3 | −3 | 1 | 1 | −3 |
| 21 | −3 | 1 | −3 | −3 | −3 | −1 |
| 22 | 1 | 1 | −3 | 3 | 1 | 3 |
| 23 | 1 | 1 | −3 | −3 | 1 | −3 |
| 24 | 1 | 1 | 3 | −1 | 3 | 3 |
| 25 | 1 | 1 | −3 | 1 | 3 | 3 |
| 26 | 1 | 1 | −1 | −1 | 3 | −1 |
| 27 | 1 | 1 | −1 | 3 | −1 | −1 |
| 28 | 1 | 1 | −1 | 3 | −3 | −1 |
| 29 | 1 | 1 | −3 | 1 | −1 | −1 |

FIG. 6

| u | $\varphi(0), …, \varphi(11)$ | | | | | | | | | | | |
|---|---|---|---|---|---|---|---|---|---|---|---|---|
| 0 | −3 | 1 | −3 | −3 | −3 | 3 | −3 | −1 | 1 | 1 | 1 | −3 |
| 1 | −3 | 3 | 1 | −3 | 1 | 3 | −1 | −1 | 1 | 3 | 3 | 3 |
| 2 | −3 | 3 | 3 | 1 | −3 | 3 | −1 | 1 | 3 | −3 | 3 | −3 |
| 3 | −3 | −3 | −1 | 3 | 3 | 3 | −3 | 3 | −3 | 1 | −1 | −3 |
| 4 | −3 | −1 | −1 | 1 | 3 | 1 | 1 | −1 | 1 | −1 | −3 | 1 |
| 5 | −3 | −3 | 3 | 1 | −3 | −3 | −3 | −1 | 3 | −1 | 1 | 3 |
| 6 | 1 | −1 | 3 | −1 | −1 | −1 | −3 | −1 | 1 | 1 | 1 | −3 |
| 7 | −1 | −3 | 3 | −1 | −3 | −3 | −3 | −1 | 1 | −1 | 1 | −3 |
| 8 | −3 | −1 | 3 | 1 | −3 | −1 | −3 | 3 | 1 | 3 | 3 | 1 |
| 9 | −3 | −1 | −1 | −3 | −3 | −1 | −3 | 3 | 1 | 3 | −1 | −3 |
| 10 | −3 | 3 | −3 | 3 | 3 | −3 | −1 | −1 | 3 | 3 | 1 | −3 |
| 11 | −3 | −1 | −3 | −1 | −1 | −3 | 3 | 3 | −1 | −1 | 1 | −3 |
| 12 | −3 | −1 | 3 | −3 | −3 | −1 | −3 | 1 | −1 | −3 | 3 | 3 |
| 13 | −3 | 1 | −1 | −1 | 3 | 3 | −3 | −1 | −1 | −3 | −1 | −3 |
| 14 | 1 | 3 | −3 | 1 | 3 | 3 | 3 | 1 | −1 | 1 | −1 | 3 |
| 15 | −3 | 1 | 3 | −1 | −1 | −3 | −3 | −1 | −1 | 3 | 1 | −3 |
| 16 | −1 | −1 | −1 | −1 | 1 | −3 | −1 | 3 | 3 | −1 | −3 | 1 |
| 17 | −1 | 1 | 1 | −1 | 1 | 3 | 3 | −1 | −1 | −3 | 1 | −3 |
| 18 | −3 | 1 | 3 | 3 | −1 | −1 | −3 | 3 | 3 | −3 | 3 | −3 |
| 19 | −3 | −3 | 3 | −3 | −1 | 3 | 3 | 3 | −1 | −3 | 1 | −3 |
| 20 | 3 | 1 | 3 | 1 | 3 | −3 | −1 | 1 | 3 | 1 | −1 | −3 |
| 21 | −3 | 3 | 1 | 3 | −3 | 1 | 1 | 1 | 1 | 3 | −3 | 3 |
| 22 | −3 | 3 | 3 | 3 | −1 | −3 | −3 | −1 | −3 | 1 | 3 | −3 |
| 23 | 3 | −1 | −3 | 3 | −3 | −1 | 3 | 3 | 3 | −3 | −1 | −3 |
| 24 | −3 | −1 | 1 | −3 | 1 | 3 | 3 | 3 | −1 | −3 | 3 | 3 |
| 25 | −3 | 3 | 1 | −1 | 3 | 3 | −3 | 1 | −1 | 1 | −1 | 1 |
| 26 | −1 | 1 | 3 | −3 | 1 | −1 | 1 | −1 | −1 | −3 | 1 | −1 |
| 27 | −3 | −3 | 3 | 3 | 3 | −3 | −1 | 1 | −3 | 3 | 1 | −3 |
| 28 | 1 | −1 | 3 | 1 | 1 | −1 | −1 | −1 | 1 | 3 | −3 | 1 |
| 29 | −3 | 3 | −3 | 3 | −3 | −3 | 3 | −1 | −1 | 1 | 3 | −3 |

FIG. 7

| u | $\varphi(0), …, \varphi(17)$ | | | | | | | | | | | | | | | | | |
|---|----|----|----|----|----|----|----|----|----|----|----|----|----|----|----|----|----|----|
| 0 | −1 | 3 | −1 | −3 | 3 | 1 | −3 | −1 | 3 | −3 | −1 | −1 | 1 | 1 | 1 | −1 | −1 | −1 |
| 1 | 3 | −3 | 3 | −1 | 1 | 3 | −3 | −1 | −3 | −3 | −1 | −3 | 3 | 1 | −1 | 3 | −3 | 3 |
| 2 | −3 | 3 | 1 | −1 | −1 | 3 | −3 | −1 | 1 | 1 | 1 | 1 | 1 | −1 | 3 | −1 | −3 | −1 |
| 3 | −3 | −3 | 3 | 3 | 3 | 1 | −3 | 1 | 3 | 3 | 1 | −3 | −3 | 3 | −1 | −3 | −1 | 1 |
| 4 | 1 | 1 | −1 | −1 | −3 | −1 | 1 | −3 | −3 | −3 | 1 | −3 | −1 | −1 | 1 | −1 | 3 | 1 |
| 5 | 3 | −3 | 1 | 1 | 3 | −1 | 1 | −1 | −1 | −3 | 1 | 1 | −1 | 3 | 3 | −3 | 3 | −1 |
| 6 | −3 | 3 | −1 | 1 | 3 | 1 | −3 | −1 | 1 | 1 | −3 | 1 | 3 | 3 | −1 | −3 | −3 | −3 |
| 7 | 1 | 1 | −3 | 3 | 3 | 1 | 3 | −3 | 3 | −1 | 1 | 1 | −1 | 1 | −3 | −3 | −1 | 3 |
| 8 | −3 | 1 | −3 | −3 | 1 | −3 | −3 | 3 | 1 | −3 | −1 | −3 | −3 | −3 | −1 | 1 | 1 | 3 |
| 9 | 3 | −1 | 3 | 1 | −3 | −3 | −1 | 1 | −3 | −3 | 3 | 3 | 3 | 1 | 3 | −3 | 3 | −3 |
| 10 | −3 | −3 | −3 | 1 | −3 | 3 | 1 | 1 | 3 | −3 | −3 | 1 | 3 | −1 | 3 | −3 | −3 | 3 |
| 11 | −3 | −3 | 3 | 3 | 3 | −1 | −1 | −3 | −1 | −1 | −1 | 3 | 1 | −3 | −3 | −1 | 3 | −1 |
| 12 | −3 | −1 | −3 | −3 | 1 | 1 | −1 | −3 | −1 | −3 | −1 | −1 | 3 | 3 | −1 | 3 | 1 | 3 |
| 13 | 1 | 1 | −3 | −3 | −3 | −3 | 1 | 3 | −3 | 3 | 3 | 1 | −3 | −1 | 3 | −1 | −3 | 1 |
| 14 | −3 | 3 | −1 | −3 | −1 | −3 | 1 | 1 | −3 | −3 | −1 | −1 | 3 | −3 | 1 | 3 | 1 | 1 |
| 15 | 3 | 1 | −3 | 1 | −3 | 3 | 3 | −1 | −3 | −3 | −1 | −3 | −3 | 3 | −3 | −1 | 1 | 3 |
| 16 | −3 | −1 | −3 | −1 | −3 | 1 | 3 | −3 | −1 | 3 | 3 | 3 | 1 | −1 | −3 | 3 | −1 | −3 |
| 17 | −3 | −1 | 3 | 3 | −1 | 3 | −1 | −3 | −1 | 1 | −1 | −3 | −1 | −1 | −1 | 3 | 3 | 1 |
| 18 | −3 | 1 | −3 | −1 | −1 | 3 | 1 | −3 | −3 | −3 | −1 | −3 | −3 | 1 | 1 | 1 | −1 | −1 |
| 19 | 3 | 3 | 3 | −3 | −1 | −3 | −1 | 3 | −1 | 1 | −1 | −3 | 1 | −3 | −3 | −1 | 3 | 3 |
| 20 | −3 | 1 | 1 | −3 | 1 | 1 | 3 | −3 | −1 | −3 | −1 | 3 | −3 | 3 | −1 | −1 | −1 | −3 |
| 21 | 1 | −3 | −1 | −3 | 3 | 3 | −1 | −3 | 1 | −3 | −3 | −1 | −3 | −1 | 1 | 3 | 3 | 3 |
| 22 | −3 | −3 | 1 | −1 | −1 | 1 | 1 | −3 | −1 | 3 | 3 | 3 | 3 | −1 | 3 | 1 | 3 | 1 |
| 23 | 3 | −1 | −3 | 1 | −3 | −3 | −3 | 3 | 3 | −1 | 1 | −3 | −1 | 3 | 1 | 1 | 3 | 3 |
| 24 | 3 | −1 | −1 | 1 | −3 | −1 | −3 | −1 | −3 | −3 | −1 | −3 | 1 | 1 | 1 | −3 | −3 | 3 |
| 25 | −3 | −3 | 1 | −3 | 3 | 3 | 3 | −1 | 3 | 1 | 1 | −3 | −3 | −3 | 3 | −3 | −1 | −1 |
| 26 | −3 | −1 | −1 | −3 | 1 | −3 | 3 | −1 | −1 | −3 | 3 | 3 | −3 | −1 | 3 | −1 | −1 | −1 |
| 27 | −3 | −3 | 3 | 3 | −3 | 1 | 3 | −1 | −3 | 1 | −1 | −3 | 3 | −3 | −1 | −1 | −1 | 3 |
| 28 | −1 | −3 | 1 | −3 | −3 | −3 | 1 | 1 | 3 | 3 | −3 | 3 | 3 | −3 | −1 | 3 | −3 | 1 |
| 29 | −3 | 3 | 1 | −1 | −1 | −1 | −1 | 1 | −1 | 3 | 3 | −3 | −1 | 1 | 3 | −1 | 3 | −1 |

FIG. 8

| u | φ(0), ..., φ(23) | | | | | | | | | | | | | | | | | | | | | | | |
|---|----|----|----|----|----|----|----|----|----|----|----|----|----|----|----|----|----|----|----|----|----|----|----|----|
| 0 | -1 | -3 | 3 | -1 | 3 | 1 | 3 | -1 | 1 | -3 | -1 | -3 | -1 | 1 | 3 | -3 | -1 | -3 | 3 | 3 | 3 | -3 | -3 | -3 |
| 1 | -1 | -3 | 3 | 1 | 1 | -3 | 1 | -3 | -3 | 1 | -3 | -1 | -1 | 3 | -3 | 3 | 3 | 3 | -3 | 1 | 3 | 3 | -3 | -3 |
| 2 | -1 | -3 | -3 | 1 | -1 | -1 | -3 | 1 | 3 | -1 | -3 | -1 | -1 | -3 | 1 | 1 | 3 | 1 | -3 | -1 | -1 | 3 | -3 | -3 |
| 3 | 1 | -3 | 3 | -1 | -3 | -1 | 3 | 3 | 1 | -1 | 1 | 1 | 3 | -3 | -1 | -3 | -3 | -3 | -1 | 3 | -3 | -1 | -3 | -3 |
| 4 | -1 | 3 | -3 | -3 | -1 | 3 | -1 | -1 | 1 | 3 | 1 | 3 | -1 | -1 | -3 | 1 | 3 | 1 | -1 | -3 | 1 | -1 | -3 | -3 |
| 5 | -3 | -1 | 1 | -3 | -3 | 1 | 1 | -3 | 3 | -1 | -1 | -3 | 1 | 3 | 1 | -1 | -3 | -1 | -3 | 1 | -3 | -3 | -3 | -3 |
| 6 | -3 | 3 | 1 | 3 | -1 | 1 | -3 | 1 | -3 | 1 | -1 | -3 | -1 | -3 | -3 | -3 | -3 | -1 | -1 | -1 | 1 | 1 | -3 | -3 |
| 7 | -3 | 1 | 3 | -1 | 1 | -1 | 3 | -3 | 3 | -1 | -3 | -1 | -3 | 3 | -1 | -1 | -1 | -3 | -1 | -1 | -3 | 3 | 3 | -3 |
| 8 | -3 | 1 | -3 | 3 | -1 | -1 | -1 | -3 | 3 | 1 | -1 | -3 | -1 | 1 | 3 | -1 | 1 | -1 | 1 | -3 | -3 | -3 | -3 | -3 |
| 9 | 1 | 1 | -1 | -3 | -1 | 1 | 1 | -3 | 1 | -1 | 1 | -3 | 3 | -3 | -3 | 3 | -1 | -3 | 1 | 3 | -3 | 1 | -3 | -3 |
| 10 | -3 | -3 | -3 | -1 | 3 | -3 | 3 | 1 | 3 | 1 | -3 | -1 | -1 | -3 | 1 | 1 | 3 | 1 | -1 | -3 | 3 | 1 | 3 | -3 |
| 11 | -3 | 3 | -1 | 3 | 1 | -1 | -1 | -1 | 3 | 3 | 1 | 1 | 1 | 3 | 3 | 1 | -3 | -3 | -1 | 1 | -3 | 1 | 3 | -3 |
| 12 | 3 | -3 | 3 | -1 | -3 | 1 | 3 | 1 | -1 | -1 | -3 | -1 | 3 | -3 | 3 | -1 | -1 | 3 | 3 | -3 | -3 | 3 | -3 | -3 |
| 13 | -3 | 3 | -1 | 3 | -1 | 3 | 3 | 1 | 1 | -3 | 1 | 3 | -3 | 3 | -3 | -3 | -1 | 1 | 3 | -3 | -1 | -1 | -3 | -3 |
| 14 | -3 | 1 | -3 | -1 | -1 | 3 | 1 | 3 | -3 | 1 | -1 | 3 | 3 | -1 | -3 | 3 | -3 | -1 | -1 | -3 | -3 | -3 | 3 | -3 |
| 15 | -3 | -1 | -1 | -3 | 1 | -3 | -3 | -1 | -1 | 3 | -1 | 1 | -1 | 3 | 1 | -3 | -1 | 3 | 1 | 1 | -1 | -1 | -3 | -3 |
| 16 | -3 | -3 | 1 | -1 | 3 | 3 | -3 | -1 | 1 | -1 | -1 | 1 | 1 | -1 | -1 | 3 | -3 | 1 | -3 | 1 | -1 | -1 | -1 | -3 |
| 17 | 3 | -1 | 3 | -1 | 1 | -3 | 1 | 1 | -3 | -3 | 3 | -3 | -1 | -1 | -1 | -1 | -1 | -3 | -3 | -1 | 1 | 1 | -3 | -3 |
| 18 | -3 | 1 | -3 | 1 | -3 | -3 | 1 | -3 | 1 | -3 | -3 | -3 | -3 | -3 | 1 | -3 | -3 | 1 | 1 | -3 | 1 | 1 | -3 | -3 |
| 19 | -3 | -3 | 3 | 3 | 1 | -1 | -1 | -1 | 1 | -3 | -1 | 1 | -1 | 3 | -3 | -1 | -3 | -1 | -1 | 1 | -3 | 3 | -1 | -3 |
| 20 | -3 | -3 | -1 | -1 | -1 | -3 | 1 | -1 | -3 | -1 | 3 | -3 | 1 | -3 | 3 | -3 | 3 | 3 | 1 | -1 | -1 | 1 | -3 | -3 |
| 21 | 3 | -1 | 1 | -1 | 3 | -3 | 1 | 1 | 3 | -1 | -3 | 3 | 1 | -3 | 3 | -1 | -1 | -1 | -1 | 1 | -3 | -3 | -3 | -3 |
| 22 | -3 | 1 | -3 | 3 | -3 | 1 | -3 | 3 | 1 | -1 | -3 | -1 | -3 | -3 | -3 | -3 | 1 | 3 | -1 | 1 | 3 | 3 | 3 | -3 |
| 23 | -3 | -1 | 1 | -3 | -1 | -1 | 1 | 1 | 1 | 3 | 3 | -1 | 1 | -1 | 1 | -1 | -1 | -3 | -3 | -3 | 3 | 1 | -1 | -3 |
| 24 | -3 | 3 | -1 | -3 | -1 | -1 | -1 | 3 | -1 | -1 | 3 | -3 | -1 | 3 | -3 | 3 | -3 | -1 | 3 | 1 | 1 | -1 | -3 | -3 |
| 25 | -3 | 1 | -1 | -3 | -3 | -1 | 1 | -3 | -1 | -3 | 1 | 1 | -1 | 1 | 1 | 3 | 3 | 3 | -1 | 1 | -1 | 1 | -1 | -3 |
| 26 | -1 | 3 | -1 | -1 | 3 | 3 | -1 | -1 | -1 | 3 | -1 | -3 | 1 | 3 | 1 | 1 | -3 | -3 | -3 | -1 | -3 | -1 | -3 | -3 |
| 27 | 3 | -3 | -3 | -1 | 3 | 3 | -3 | -1 | 3 | 1 | 1 | 1 | 3 | -1 | 3 | -3 | -1 | 3 | -1 | 3 | 1 | -1 | -3 | -3 |
| 28 | -3 | 1 | -3 | 1 | -3 | 1 | 1 | 3 | 1 | -3 | -3 | -1 | 1 | 3 | -1 | -3 | 3 | 1 | -1 | -3 | -3 | -3 | -3 | -3 |
| 29 | 3 | -3 | -1 | 1 | 3 | -1 | -1 | -3 | -1 | 3 | -1 | -3 | -1 | -3 | 3 | -1 | 3 | 1 | 1 | -3 | 3 | -3 | -3 | -3 |

FIG. 9

| u | $\varphi(0), ..., \varphi(5)$ | | | | | |
|---|---|---|---|---|---|---|
| 0 | −1 | −7 | −3 | −5 | −1 | 3 |
| 1 | −1 | 3 | 7 | −3 | 7 | 3 |
| 2 | −1 | 3 | 1 | 5 | −1 | −5 |
| 3 | −7 | −3 | −7 | 5 | −7 | −3 |
| 4 | 7 | 5 | −1 | −7 | −3 | 1 |
| 5 | 3 | −3 | 1 | 5 | −1 | −1 |
| 6 | −7 | −3 | −7 | −3 | 7 | −5 |
| 7 | −7 | −3 | 1 | −5 | −1 | −5 |
| 8 | −7 | −3 | 3 | −3 | −7 | −3 |
| 9 | −7 | −7 | −1 | 1 | −5 | 1 |
| 10 | −7 | −3 | −7 | 5 | −1 | 5 |
| 11 | −7 | −7 | −3 | 1 | 5 | −1 |
| 12 | 5 | 7 | −3 | −5 | 5 | −5 |
| 13 | −3 | 7 | −5 | −1 | −5 | −1 |
| 14 | 5 | −7 | 7 | 1 | 5 | 1 |
| 15 | −7 | 3 | 1 | 5 | −1 | 3 |
| 16 | −7 | −5 | −1 | −7 | −5 | 5 |
| 17 | −7 | 1 | −3 | 3 | 7 | 5 |
| 18 | −7 | −7 | 3 | 5 | 1 | 5 |
| 19 | −7 | −3 | 3 | −1 | 3 | −5 |
| 20 | −7 | −5 | 5 | 3 | −7 | −1 |
| 21 | 1 | 5 | 1 | 5 | 3 | 7 |
| 22 | 1 | −3 | 1 | −5 | −1 | 3 |
| 23 | 1 | 7 | 1 | −5 | −7 | −1 |
| 24 | 1 | −1 | 3 | −1 | −7 | −3 |
| 25 | 1 | −1 | −5 | −1 | 3 | −3 |
| 26 | 1 | −1 | 3 | −1 | 3 | 7 |
| 27 | −5 | 3 | 7 | 5 | 3 | 7 |
| 28 | −7 | 1 | −3 | 1 | 5 | 1 |
| 29 | 1 | 5 | 3 | −7 | 5 | −3 |

FIG. 10

| u | b(0), ..., b(11) | | | | | | | | | | | |
|---|---|---|---|---|---|---|---|---|---|---|---|---|
| 0 | 0 | 0 | 0 | 0 | 0 | 0 | 1 | 1 | 0 | 1 | 1 | 0 |
| 1 | 0 | 0 | 0 | 0 | 0 | 1 | 0 | 0 | 0 | 1 | 1 | 1 |
| 2 | 0 | 0 | 0 | 0 | 0 | 1 | 1 | 1 | 0 | 1 | 1 | 1 |
| 3 | 1 | 1 | 0 | 1 | 1 | 0 | 1 | 0 | 1 | 0 | 0 | 0 |
| 4 | 1 | 1 | 0 | 0 | 1 | 0 | 1 | 0 | 1 | 0 | 0 | 1 |
| 5 | 1 | 0 | 1 | 1 | 0 | 1 | 0 | 0 | 1 | 0 | 1 | 1 |
| 6 | 0 | 0 | 0 | 1 | 0 | 0 | 1 | 0 | 0 | 0 | 1 | 0 |
| 7 | 0 | 1 | 0 | 0 | 0 | 1 | 0 | 0 | 1 | 0 | 0 | 0 |
| 8 | 1 | 0 | 1 | 1 | 1 | 1 | 0 | 1 | 1 | 0 | 1 | 1 |
| 9 | 1 | 0 | 1 | 1 | 0 | 1 | 1 | 1 | 1 | 0 | 0 | 0 |
| 10 | 1 | 0 | 1 | 1 | 0 | 1 | 0 | 0 | 0 | 1 | 1 | 0 |
| 11 | 1 | 0 | 1 | 0 | 0 | 1 | 0 | 0 | 1 | 0 | 1 | 0 |
| 12 | 1 | 1 | 0 | 0 | 0 | 0 | 0 | 1 | 1 | 1 | 1 | 0 |
| 13 | 0 | 1 | 0 | 0 | 0 | 1 | 1 | 0 | 1 | 0 | 1 | 1 |
| 14 | 0 | 0 | 0 | 0 | 0 | 1 | 1 | 0 | 0 | 0 | 1 | 1 |
| 15 | 0 | 0 | 0 | 0 | 0 | 1 | 0 | 0 | 1 | 0 | 0 | 1 |
| 16 | 0 | 0 | 1 | 0 | 0 | 1 | 0 | 0 | 0 | 0 | 0 | 1 |
| 17 | 0 | 0 | 0 | 0 | 0 | 1 | 1 | 0 | 1 | 1 | 1 | 0 |
| 18 | 0 | 0 | 0 | 1 | 1 | 1 | 1 | 1 | 0 | 0 | 0 | 1 |
| 19 | 1 | 0 | 0 | 0 | 1 | 0 | 0 | 0 | 0 | 0 | 1 | 1 |
| 20 | 0 | 1 | 1 | 1 | 1 | 0 | 1 | 0 | 1 | 1 | 1 | 1 |
| 21 | 0 | 1 | 1 | 1 | 0 | 1 | 0 | 0 | 1 | 1 | 0 | 1 |
| 22 | 0 | 1 | 1 | 1 | 1 | 1 | 0 | 0 | 1 | 0 | 0 | 0 |
| 23 | 0 | 1 | 1 | 1 | 0 | 0 | 0 | 0 | 0 | 1 | 0 | 0 |
| 24 | 0 | 0 | 1 | 1 | 1 | 1 | 1 | 1 | 1 | 1 | 0 | 0 |
| 25 | 0 | 1 | 1 | 1 | 0 | 0 | 1 | 1 | 0 | 1 | 0 | 0 |
| 26 | 0 | 1 | 1 | 1 | 0 | 1 | 1 | 1 | 0 | 1 | 1 | 1 |
| 27 | 0 | 1 | 1 | 1 | 1 | 1 | 1 | 0 | 0 | 0 | 1 | 1 |
| 28 | 0 | 1 | 1 | 1 | 1 | 0 | 0 | 0 | 0 | 0 | 1 | 1 |
| 29 | 0 | 1 | 1 | 1 | 0 | 1 | 1 | 1 | 1 | 0 | 1 | 1 |

FIG. 11

| u | b(0), ..., b(17) | | | | | | | | | | | | | | | | | |
|---|---|---|---|---|---|---|---|---|---|---|---|---|---|---|---|---|---|---|
| 0 | 0 | 0 | 0 | 0 | 0 | 1 | 0 | 0 | 0 | 1 | 1 | 1 | 1 | 1 | 0 | 0 | 0 | 1 |
| 1 | 0 | 0 | 0 | 0 | 0 | 0 | 0 | 1 | 1 | 1 | 1 | 1 | 0 | 0 | 1 | 0 | 0 | 1 |
| 2 | 0 | 0 | 0 | 0 | 0 | 1 | 1 | 1 | 1 | 0 | 1 | 1 | 1 | 0 | 1 | 1 | 1 | 1 |
| 3 | 0 | 1 | 0 | 1 | 1 | 0 | 1 | 1 | 0 | 0 | 0 | 1 | 1 | 0 | 1 | 0 | 1 | 1 |
| 4 | 1 | 1 | 0 | 1 | 0 | 0 | 1 | 0 | 1 | 0 | 1 | 0 | 0 | 1 | 1 | 1 | 1 | 0 |
| 5 | 0 | 1 | 0 | 1 | 0 | 1 | 1 | 1 | 0 | 0 | 1 | 0 | 1 | 1 | 0 | 1 | 1 | 0 |
| 6 | 0 | 0 | 0 | 1 | 1 | 1 | 0 | 0 | 0 | 1 | 0 | 0 | 0 | 1 | 1 | 1 | 1 | 1 |
| 7 | 0 | 1 | 0 | 1 | 0 | 0 | 0 | 1 | 1 | 0 | 1 | 0 | 0 | 0 | 0 | 0 | 1 | 1 |
| 8 | 0 | 0 | 1 | 0 | 1 | 0 | 0 | 0 | 1 | 0 | 1 | 0 | 0 | 1 | 0 | 0 | 0 | 1 |
| 9 | 1 | 0 | 1 | 1 | 0 | 0 | 1 | 0 | 1 | 0 | 1 | 0 | 0 | 1 | 0 | 0 | 0 | 1 |
| 10 | 1 | 0 | 1 | 1 | 0 | 0 | 0 | 1 | 1 | 1 | 0 | 0 | 0 | 0 | 0 | 0 | 0 | 1 |
| 11 | 1 | 1 | 0 | 1 | 1 | 0 | 1 | 1 | 1 | 0 | 1 | 1 | 1 | 1 | 1 | 0 | 0 | 0 |
| 12 | 1 | 0 | 0 | 0 | 1 | 0 | 1 | 0 | 1 | 0 | 0 | 0 | 1 | 1 | 0 | 1 | 0 | 1 |
| 13 | 1 | 0 | 1 | 1 | 0 | 1 | 0 | 1 | 1 | 1 | 0 | 0 | 0 | 0 | 0 | 1 | 1 | 0 |
| 14 | 0 | 0 | 0 | 0 | 0 | 1 | 1 | 1 | 0 | 1 | 1 | 0 | 1 | 0 | 1 | 1 | 0 | 0 |
| 15 | 0 | 0 | 1 | 1 | 1 | 0 | 1 | 1 | 0 | 1 | 0 | 0 | 0 | 1 | 1 | 0 | 1 | 0 |
| 16 | 0 | 1 | 0 | 0 | 1 | 0 | 0 | 0 | 1 | 1 | 1 | 0 | 1 | 0 | 0 | 1 | 1 | 1 |
| 17 | 0 | 1 | 0 | 0 | 1 | 1 | 0 | 1 | 1 | 0 | 0 | 0 | 0 | 0 | 0 | 0 | 1 | 0 |
| 18 | 0 | 0 | 1 | 0 | 0 | 1 | 1 | 1 | 1 | 0 | 0 | 0 | 0 | 0 | 1 | 1 | 0 | 0 |
| 19 | 0 | 0 | 0 | 0 | 0 | 0 | 0 | 1 | 0 | 0 | 1 | 0 | 0 | 1 | 1 | 0 | 1 | 1 |
| 20 | 0 | 0 | 0 | 0 | 0 | 1 | 1 | 0 | 0 | 0 | 0 | 1 | 0 | 0 | 1 | 1 | 1 | 1 |
| 21 | 1 | 1 | 1 | 1 | 0 | 1 | 0 | 1 | 1 | 1 | 1 | 1 | 0 | 0 | 1 | 0 | 0 | 1 |
| 22 | 1 | 0 | 0 | 1 | 0 | 0 | 0 | 1 | 0 | 0 | 1 | 1 | 1 | 1 | 0 | 1 | 1 | 1 |
| 23 | 0 | 0 | 1 | 0 | 0 | 0 | 1 | 1 | 1 | 0 | 0 | 0 | 1 | 0 | 0 | 1 | 0 | 1 |
| 24 | 1 | 1 | 0 | 1 | 1 | 0 | 0 | 0 | 0 | 0 | 0 | 0 | 1 | 1 | 0 | 1 | 1 | 0 |
| 25 | 1 | 1 | 0 | 1 | 0 | 1 | 0 | 1 | 1 | 0 | 0 | 0 | 0 | 1 | 0 | 0 | 1 | 0 |
| 26 | 0 | 1 | 1 | 1 | 1 | 1 | 1 | 1 | 0 | 0 | 1 | 0 | 1 | 0 | 0 | 1 | 0 | 0 |
| 27 | 0 | 1 | 1 | 0 | 1 | 1 | 1 | 0 | 0 | 0 | 0 | 0 | 0 | 0 | 1 | 1 | 0 | 0 |
| 28 | 0 | 0 | 0 | 1 | 1 | 0 | 0 | 0 | 0 | 0 | 0 | 0 | 0 | 0 | 1 | 1 | 0 | 0 |
| 29 | 0 | 1 | 1 | 1 | 0 | 1 | 1 | 0 | 1 | 0 | 1 | 1 | 1 | 0 | 1 | 1 | 0 | 0 |

FIG. 12

| u | b(0), ..., b(23) | | | | | | | | | | | | | | | | | | | | | | | |
|---|---|---|---|---|---|---|---|---|---|---|---|---|---|---|---|---|---|---|---|---|---|---|---|---|
| 0 | 0 | 0 | 0 | 0 | 0 | 0 | 0 | 1 | 0 | 0 | 1 | 1 | 1 | 1 | 1 | 0 | 0 | 1 | 0 | 0 | 1 | 0 | 0 | 1 |
| 1 | 0 | 0 | 0 | 0 | 0 | 0 | 0 | 1 | 0 | 0 | 1 | 0 | 1 | 1 | 0 | 1 | 1 | 1 | 0 | 0 | 0 | 1 | 1 | 0 |
| 2 | 0 | 0 | 0 | 0 | 0 | 0 | 0 | 0 | 1 | 0 | 0 | 1 | 0 | 0 | 1 | 0 | 0 | 1 | 1 | 1 | 1 | 0 | 1 | 1 |
| 3 | 0 | 0 | 0 | 0 | 0 | 0 | 0 | 0 | 1 | 1 | 0 | 1 | 1 | 0 | 0 | 1 | 0 | 1 | 0 | 1 | 1 | 0 | 1 | 1 |
| 4 | 1 | 0 | 0 | 1 | 1 | 1 | 1 | 1 | 0 | 1 | 1 | 0 | 1 | 1 | 1 | 0 | 1 | 1 | 0 | 0 | 0 | 1 | 1 | 1 |
| 5 | 1 | 0 | 1 | 0 | 1 | 1 | 0 | 1 | 1 | 0 | 0 | 1 | 1 | 1 | 1 | 1 | 0 | 0 | 1 | 1 | 0 | 1 | 1 | 1 |
| 6 | 0 | 1 | 1 | 0 | 0 | 1 | 0 | 0 | 1 | 1 | 1 | 1 | 1 | 1 | 0 | 1 | 1 | 1 | 1 | 0 | 1 | 1 | 0 | 1 |
| 7 | 1 | 0 | 1 | 1 | 1 | 1 | 1 | 1 | 1 | 1 | 1 | 0 | 1 | 0 | 0 | 1 | 1 | 1 | 0 | 0 | 1 | 1 | 0 | 1 |
| 8 | 0 | 0 | 1 | 0 | 0 | 1 | 0 | 1 | 0 | 0 | 0 | 1 | 0 | 0 | 1 | 0 | 0 | 0 | 0 | 0 | 1 | 1 | 1 | 0 |
| 9 | 0 | 0 | 0 | 0 | 1 | 0 | 0 | 1 | 1 | 0 | 1 | 0 | 0 | 0 | 0 | 0 | 1 | 1 | 0 | 0 | 0 | 1 | 0 | 1 |
| 10 | 1 | 0 | 1 | 0 | 0 | 0 | 1 | 1 | 1 | 0 | 0 | 1 | 1 | 1 | 1 | 0 | 1 | 1 | 1 | 1 | 0 | 0 | 1 | 0 |
| 11 | 0 | 0 | 1 | 0 | 0 | 1 | 0 | 0 | 0 | 0 | 0 | 1 | 1 | 1 | 0 | 0 | 0 | 1 | 0 | 0 | 1 | 0 | 1 | 0 |
| 12 | 1 | 0 | 1 | 0 | 0 | 1 | 1 | 1 | 0 | 1 | 0 | 0 | 0 | 1 | 0 | 1 | 1 | 1 | 0 | 0 | 1 | 0 | 1 | 1 |
| 13 | 1 | 0 | 1 | 0 | 0 | 1 | 1 | 0 | 1 | 1 | 0 | 1 | 0 | 1 | 0 | 1 | 1 | 0 | 1 | 1 | 0 | 0 | 1 | 0 |
| 14 | 1 | 0 | 1 | 0 | 0 | 0 | 1 | 0 | 0 | 1 | 1 | 1 | 0 | 0 | 0 | 0 | 0 | 1 | 0 | 0 | 1 | 0 | 1 | 1 |
| 15 | 1 | 0 | 0 | 1 | 0 | 1 | 0 | 0 | 1 | 1 | 0 | 0 | 0 | 0 | 1 | 1 | 1 | 1 | 1 | 1 | 1 | 0 | 0 | 1 |
| 16 | 0 | 0 | 0 | 1 | 1 | 1 | 1 | 0 | 0 | 1 | 0 | 1 | 0 | 0 | 1 | 1 | 1 | 0 | 1 | 1 | 1 | 0 | 0 | 1 |
| 17 | 1 | 1 | 0 | 1 | 0 | 1 | 1 | 1 | 0 | 0 | 1 | 1 | 1 | 0 | 0 | 0 | 0 | 0 | 0 | 1 | 1 | 0 | 1 | 0 |
| 18 | 0 | 0 | 0 | 0 | 0 | 0 | 0 | 0 | 0 | 1 | 1 | 1 | 1 | 0 | 0 | 1 | 0 | 1 | 1 | 0 | 0 | 0 | 0 | 1 |
| 19 | 1 | 0 | 0 | 0 | 1 | 0 | 1 | 1 | 0 | 0 | 0 | 1 | 0 | 0 | 0 | 0 | 0 | 0 | 0 | 0 | 0 | 1 | 1 | 1 |
| 20 | 0 | 0 | 0 | 0 | 0 | 0 | 1 | 1 | 1 | 0 | 1 | 1 | 0 | 0 | 1 | 1 | 0 | 0 | 0 | 1 | 0 | 1 | 0 | 0 |
| 21 | 0 | 1 | 1 | 0 | 1 | 0 | 1 | 1 | 1 | 0 | 0 | 0 | 0 | 1 | 0 | 0 | 0 | 0 | 1 | 0 | 0 | 0 | 1 | 1 |
| 22 | 1 | 0 | 1 | 0 | 0 | 1 | 0 | 0 | 0 | 0 | 0 | 1 | 1 | 1 | 0 | 0 | 1 | 0 | 0 | 0 | 1 | 0 | 1 | 1 |
| 23 | 1 | 0 | 0 | 1 | 1 | 0 | 1 | 0 | 0 | 0 | 0 | 0 | 1 | 1 | 1 | 1 | 1 | 1 | 1 | 1 | 0 | 0 | 1 | 1 |
| 24 | 1 | 0 | 0 | 0 | 1 | 1 | 0 | 1 | 0 | 1 | 0 | 0 | 1 | 0 | 0 | 1 | 1 | 1 | 1 | 1 | 1 | 0 | 0 | 0 |
| 25 | 1 | 0 | 1 | 0 | 1 | 1 | 0 | 0 | 0 | 1 | 0 | 0 | 0 | 1 | 1 | 1 | 1 | 1 | 1 | 0 | 0 | 1 | 0 | 0 |
| 26 | 0 | 1 | 0 | 0 | 1 | 0 | 1 | 0 | 1 | 1 | 0 | 0 | 0 | 1 | 1 | 1 | 1 | 1 | 1 | 0 | 0 | 1 | 0 | 0 |
| 27 | 0 | 1 | 0 | 1 | 1 | 0 | 1 | 0 | 1 | 0 | 1 | 0 | 1 | 1 | 0 | 1 | 1 | 0 | 0 | 1 | 0 | 0 | 1 | 1 |
| 28 | 0 | 1 | 0 | 0 | 0 | 1 | 1 | 0 | 1 | 0 | 1 | 0 | 1 | 1 | 1 | 0 | 1 | 0 | 0 | 1 | 0 | 0 | 1 | 1 |
| 29 | 0 | 1 | 0 | 0 | 1 | 0 | 0 | 1 | 1 | 1 | 1 | 1 | 1 | 1 | 1 | 1 | 1 | 0 | 0 | 1 | 0 | 0 | 1 | 1 |

FIG. 13

Frequency
domain filling

FFT

IFFT

FIG. 14

A base station generates a low power wake-up signal — 1501

The base station sends the low power wake-up signal through broadcast — 1502

FIG. 15

(a)

(b)

FIG. 16

A UE receives a synchronization parameter related to a synchronization signal — 1701

↓

The UE receives a low power wake-up signal — 1702

↓

The UE determines, based on the synchronization parameter, time domain sequences corresponding to OOK symbols carried on a plurality of OFDM symbols — 1703

↓

The UE performs auxiliary synchronization on the UE based on the time domain sequences corresponding to the OOK symbols carried on the plurality of OFDM symbols — 1704

FIG. 17

A UE receives a low power wake-up signal — 1801

↓

The UE wakes up the UE based on the low power wake-up signal — 1802

FIG. 18

Communication apparatus
1900

Processing unit 1910

Transceiver unit 1920

FIG. 19

Communication apparatus 2000

Processor 2010

Interface circuit
2020

Memory 2030

FIG. 20

## INTERNATIONAL SEARCH REPORT

| International application No. |
|---|
| **PCT/CN2023/108240** |

| | |
|---|---|
| **A.** | **CLASSIFICATION OF SUBJECT MATTER** |
| | H04L 27/26(2006.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, CNABS, CNKI, ENTXT, VEN: 低功耗, 唤醒信号, 键控, 序列, 时域, 同步, 同步信号, WUS, OOK, DFT, FSK, LTE, NR, ZC, OFDM, SYNC, low power, lowpower, signal, wake up, wakeup

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 113498598 A (IDAC HOLDINGS, INC.) 12 October 2021 (2021-10-12) description, paragraphs [0027]-[0157] | 1, 6-7, 10, 16-24 |
| A | CN 113498598 A (IDAC HOLDINGS, INC.) 12 October 2021 (2021-10-12) entire document | 2-5, 8-9, 11-15 |
| A | CN 111343120 A (CHENGDU HUAWEI TECHNOLOGIES CO., LTD.) 26 June 2020 (2020-06-26) entire document | 1-24 |
| A | US 2018184378 A1 (INTEL CORP.) 28 June 2018 (2018-06-28) entire document | 1-24 |
| A | InterDigital, Inc. "R1-2004318 Orthogonal ON-OFF keying for wake-up signal design" *3GPP tsg_ran\wg1_rl1,* 16 May 2020 (2020-05-16), entire document | 1-24 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2023** | **26 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108240**

| Patent document cited in search report | | | Publication date (day/month/year) | Patent family member(s) | | | Publication date (day/month/year) |
|---|---|---|---|---|---|---|---|
| CN | 113498598 | A | 12 October 2021 | WO | 2020172549 | A1 | 27 August 2020 |
| | | | | US | 2022095228 | A1 | 24 March 2022 |
| | | | | EP | 3928482 | A1 | 29 December 2021 |
| | | | | JP | 2022521331 | A | 06 April 2022 |
| CN | 111343120 | A | 26 June 2020 | WO | 2020125455 | A1 | 25 June 2020 |
| US | 2018184378 | A1 | 28 June 2018 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211379978